# EUROPEAN PATENT APPLICATION

(11) **EP 4 583 514 A1**
(43) Date of publication of application: **09.07.2025**
(21) Application number: 23879590.0
(22) Date of filing: 02.10.2023
(51) Int. Cl.: H04N 21/234, H04N 21/258, H04N 23/63

(54) **INFORMATION PROCESSING DEVICE, INFORMATION PROCESSING METHOD, AND PROGRAM**

(30) Priority: 21.10.2022 JP 2022169312
(71) Applicant: Sony Group Corporation, Tokyo 108-0075 (JP)
(72) Inventor: IMAEDA, Kota, Tokyo 108-0075 (JP); OKADA, Kazuhira, Tokyo 108-0075 (JP); TAHARA, Daisuke, Tokyo 108-0075 (JP)
(74) Representative: D Young & Co LLP
(86) International application number: PCT/JP2023/035945
(87) International publication number: WO 2024/084943

(57) **Abstract**

An information processing device includes a video processing unit that performs processing for generating shooting-target-space video data including shooting range presentation video presenting a shooting range of each of a plurality of cameras, the shooting-target-space video data being generated in accordance with observer information about the observer of the shooting video of the camera.

## Description

### [Technical Field]

The present technique relates to an information processing device, an information processing method, and a program, and relates to displaying of video in a shooting target space or virtual video.

### [Background Art]

There is a known technique for displaying the position and shooting direction of a camera in a space to be photographed by the camera.

PTL 1 discloses a technique in which a processor displays the position and shooting range of a camera on the basis of a position, an angle of view, and a focus position in camera data received from the camera.

### [Citation List]

### [Patent Literature]

[PTL 1]
WO 2020/202756

### [Summary]

### [Technical Problem]

For viewers of broadcasts or distributions of video captured by cameras at sports or event venues, it is preferable that the positions and shooting ranges of the cameras be clearly indicated. This is because video viewers can more easily recognize locations, which are being captured by the cameras, at a venue as a shooting target space. In such a case, in addition to simply displaying the shooting range of the camera, displaying of even more useful information is desirable .

Hence, the present disclosure proposes a technique for displaying video that facilitates an observer to recognize correspondence between video captured by a camera and a position in a space, and providing display that reflects the state of the observer.

### [Solution to Problem]

An information processing device according to the present technique includes a video processing unit that performs processing for generating shooting-target-space video data including shooting range presentation video presenting a shooting range of each of a plurality of cameras, the shooting-target-space video data being generated in accordance with observer information about the observer of the shooting video of the camera.

The shooting range presentation video is video presenting the shooting range determined by the zoom angle of view and the shooting direction of the camera. For example, the content and display mode or the like of video including the shooting range presentation video added in the shooting target space of the camera are generated according to the observer information.

### [Brief Description of Drawings]

[Fig. 1]

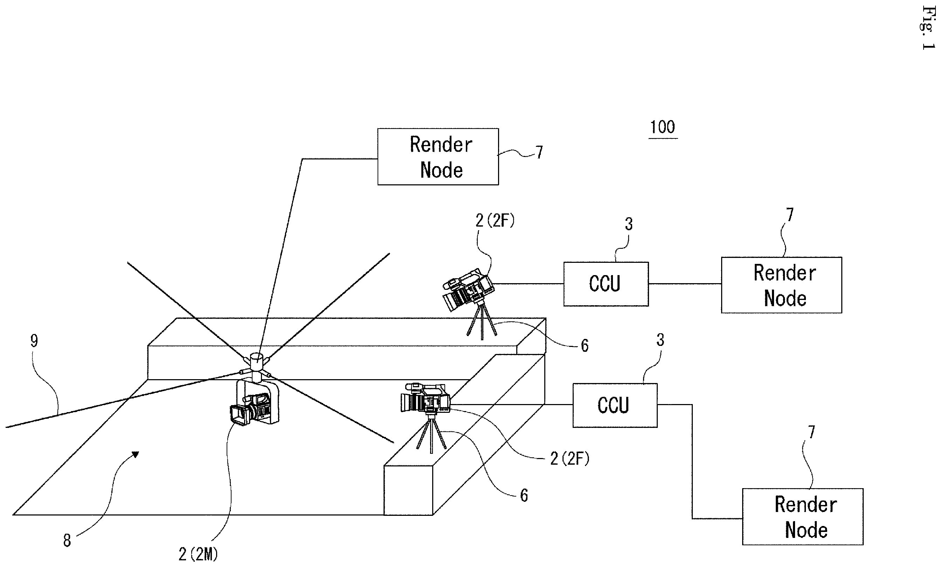

   Fig. 1 is an explanatory drawing illustrating shooting by a shooting system according to an embodiment of the present technique.
[Fig. 2]

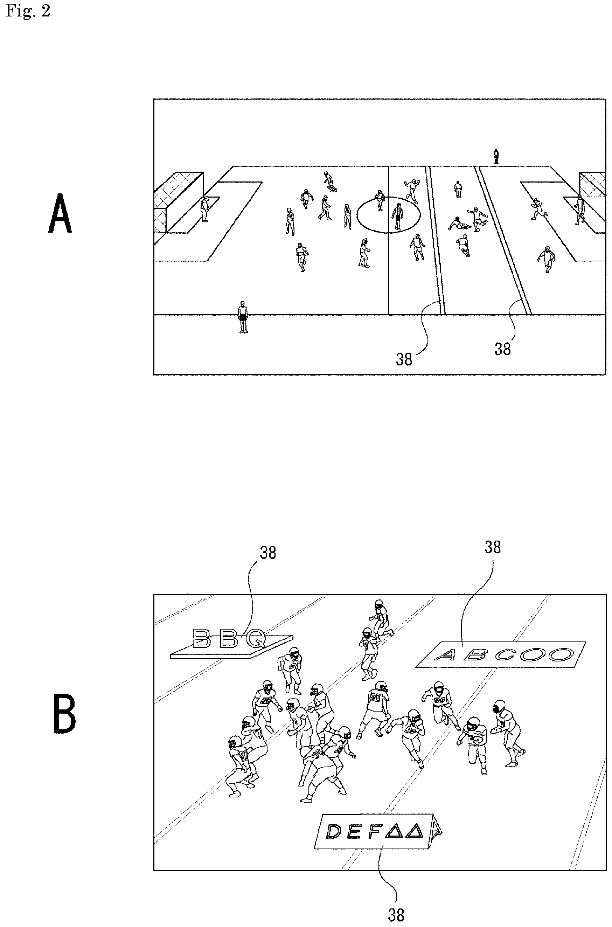

   Fig. 2 is an explanatory drawing of AR (Augmented Reality) superimposed video.
[Fig. 3]

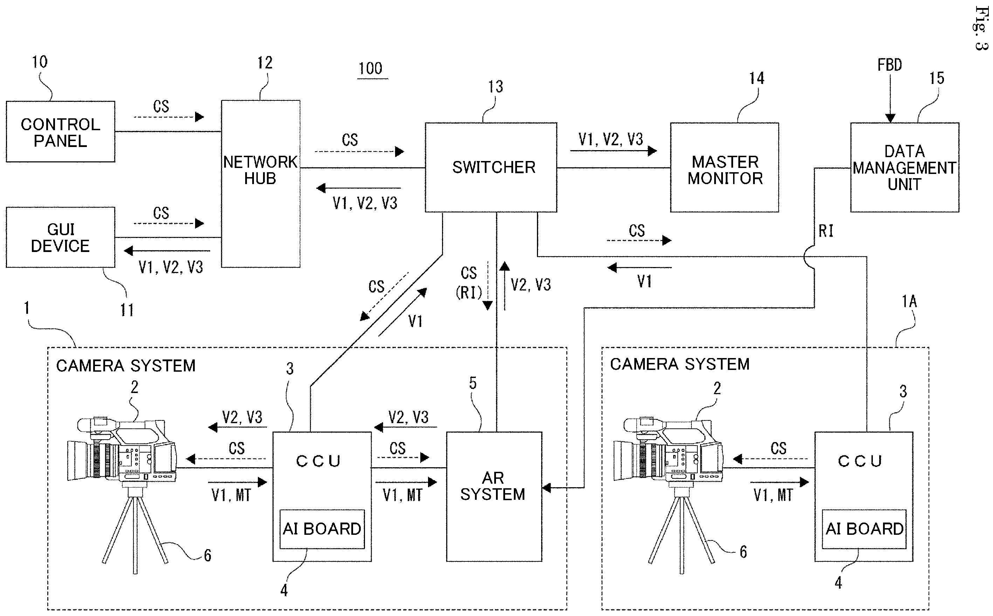

   Fig. 3 is an explanatory drawing showing the configuration of the shooting system according to the embodiment.
[Fig. 4]

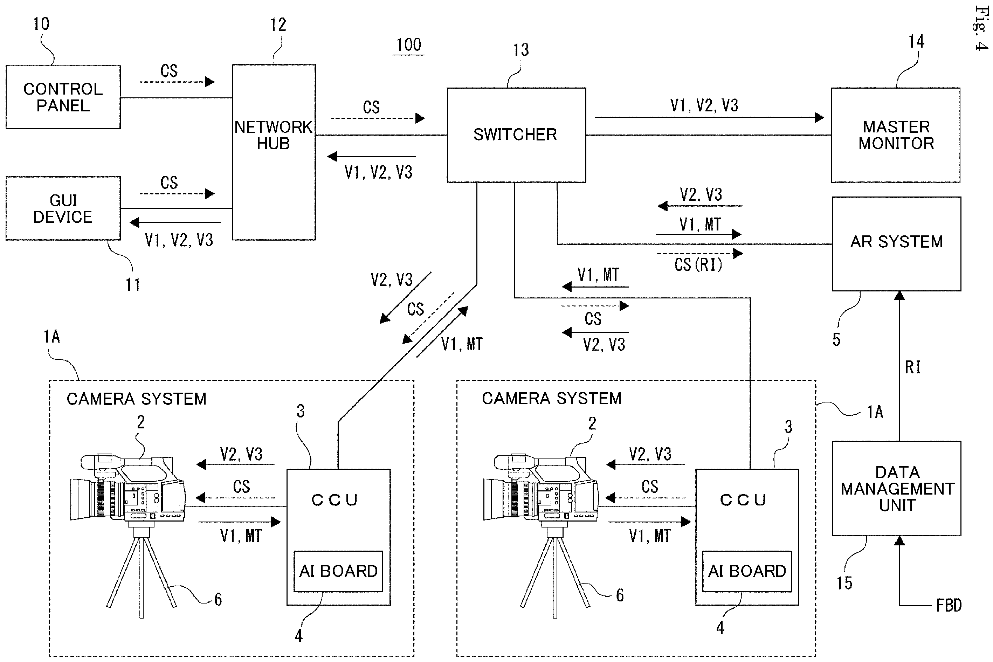

   Fig. 4 is an explanatory drawing showing another configuration example of the shooting system according to the embodiment.
[Fig. 5]

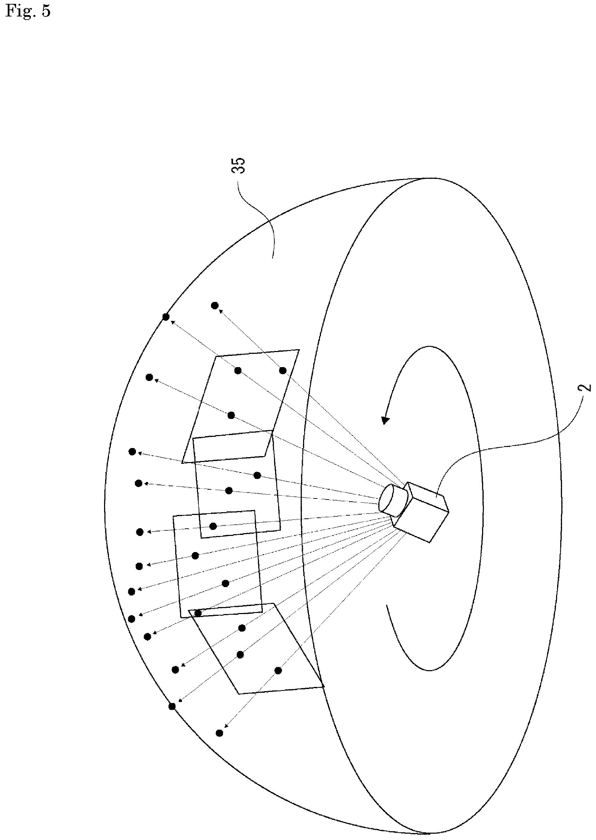

   Fig. 5 is an explanatory drawing of an environment map according to the embodiment.
[Fig. 6]

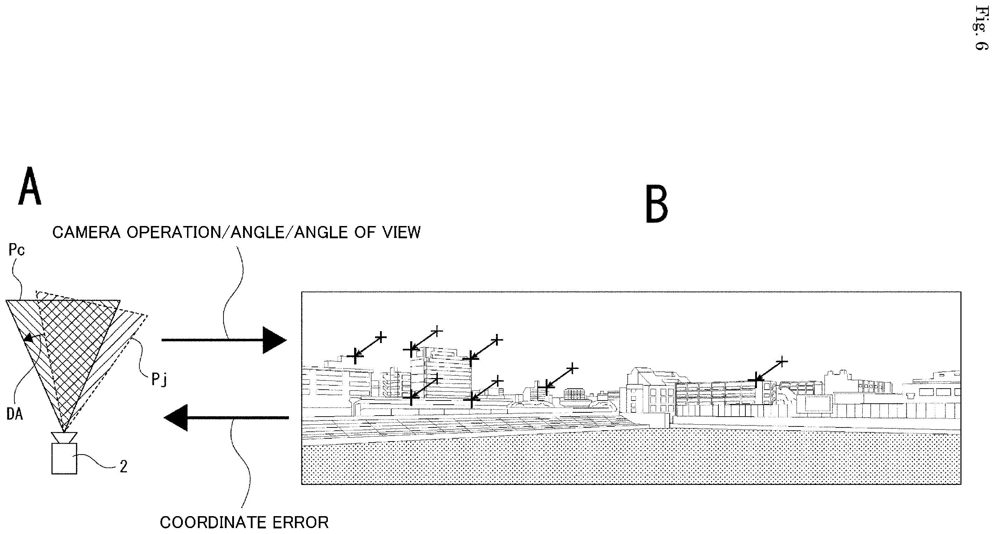

   Fig. 6 is an explanatory drawing illustrating the drift correction of the environment map according to the embodiment.
[Fig. 7]

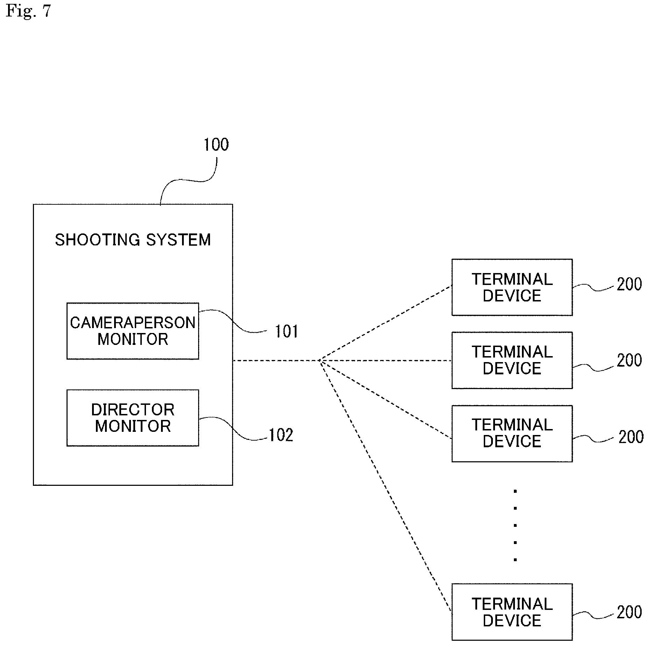

   Fig. 7 is an explanatory drawing showing the shooting system and terminal devices according to the embodiment.
[Fig. 8]

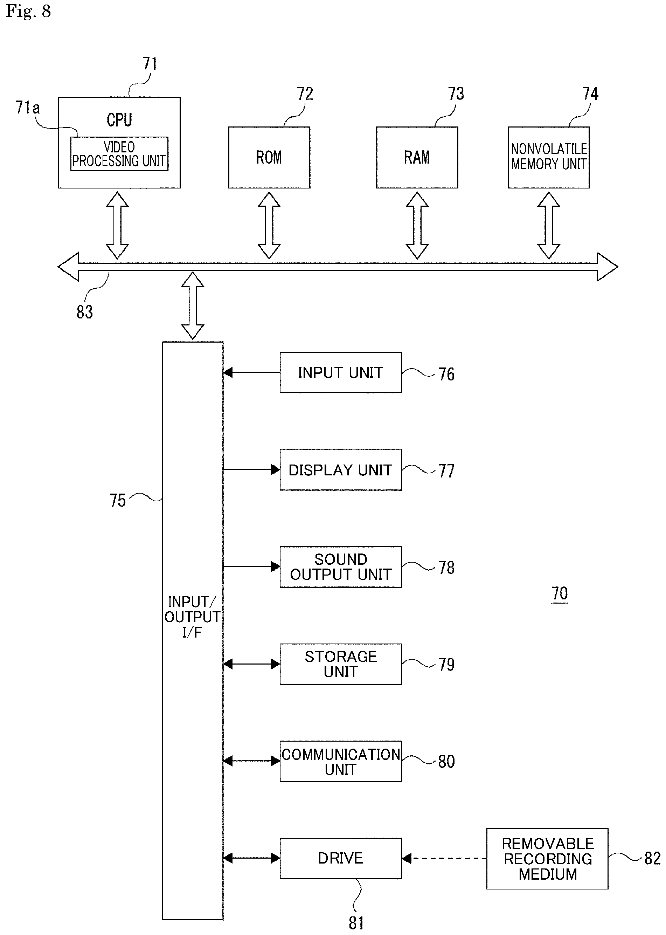

   Fig. 8 is a block diagram illustrating an information processing device according to the embodiment.
[Fig. 9]

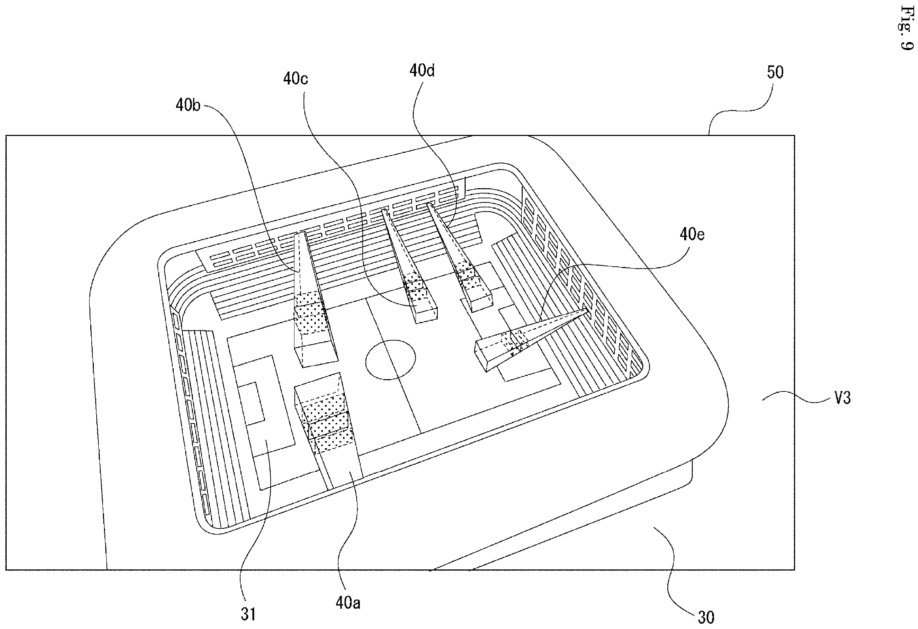

   Fig. 9 is an explanatory drawing illustrating a display example of a plurality of view frustums in overhead video according to the embodiment.
[Fig. 10]

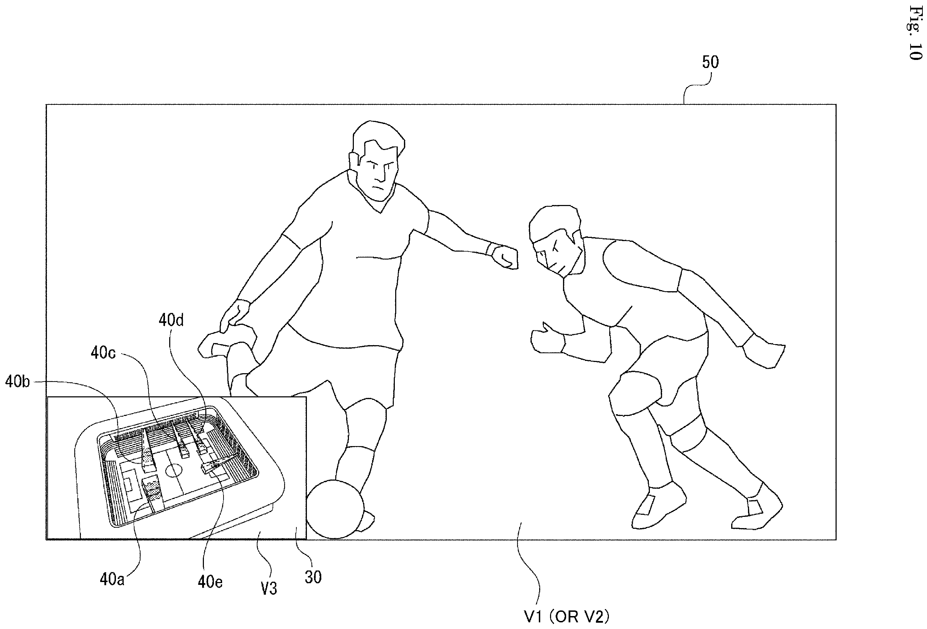

   Fig. 10 is an explanatory drawing illustrating a display example of the overhead video according to the embodiment.
[Fig. 11]

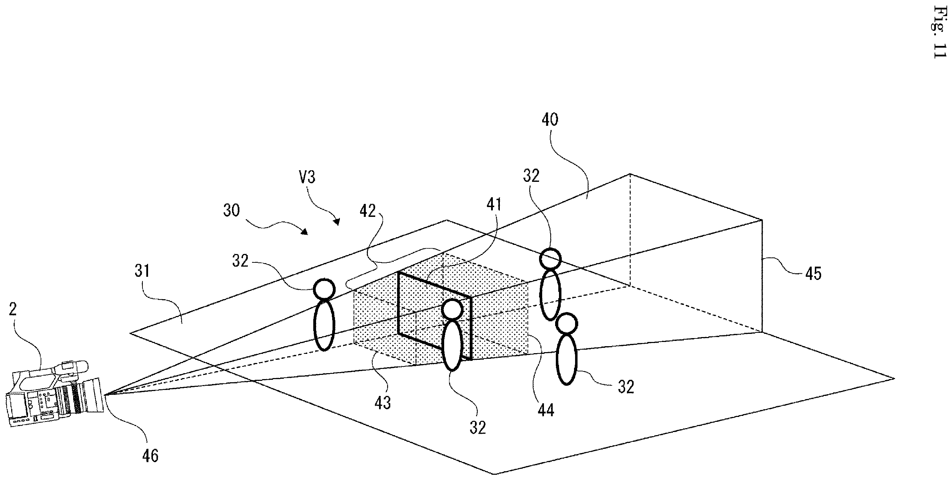

   Fig. 11 is an explanatory drawing illustrating the view frustum according to the embodiment.
[Fig. 12]

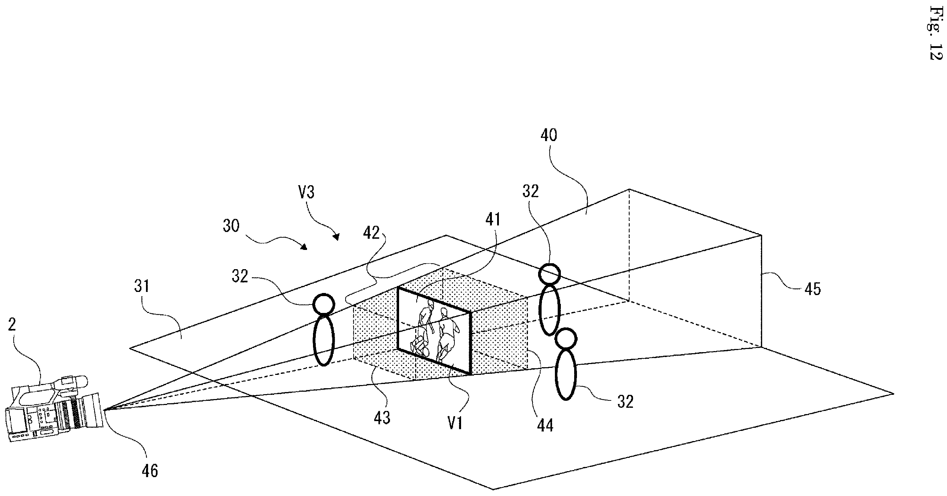

   Fig. 12 is an explanatory drawing illustrating a display example of shooting video on the focus plane of the view frustum according to the embodiment.
[Fig. 13]

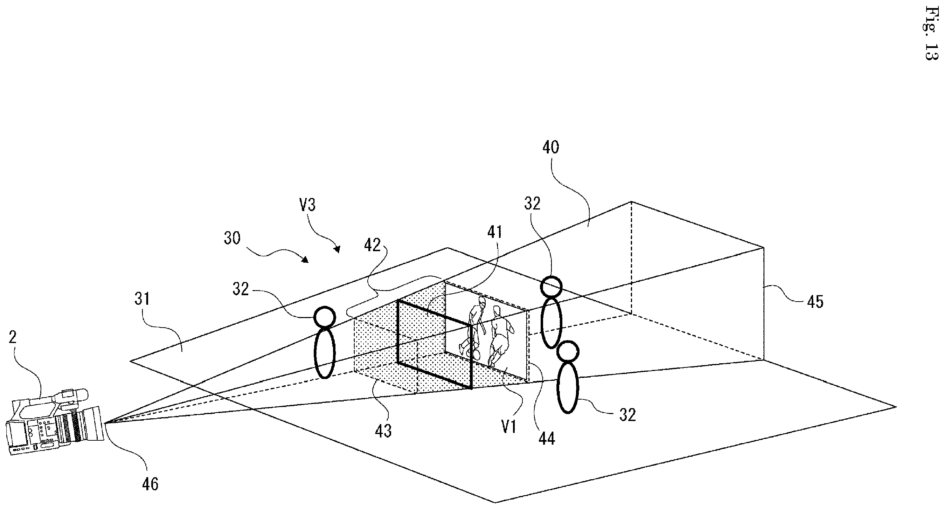

   Fig. 13 is an explanatory drawing illustrating a display example of shooting video in the depth of field of the view frustum according to the embodiment.
[Fig. 14]

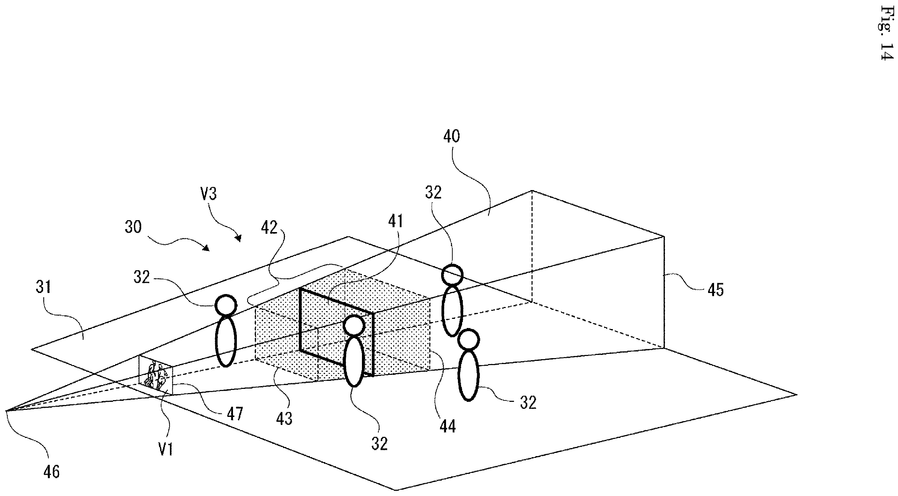

   Fig. 14 is an explanatory drawing illustrating a display example of shooting video at a position close to the starting point of the view frustum according to the embodiment.
[Fig. 15]

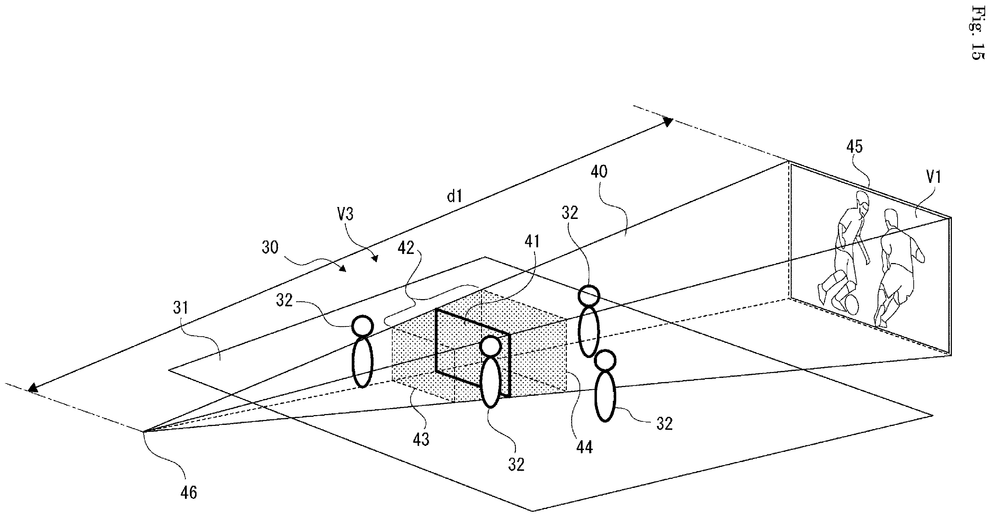

   Fig. 15 is an explanatory drawing illustrating a display example of shooting video on the far end face of the view frustum according to the embodiment.
[Fig. 16]

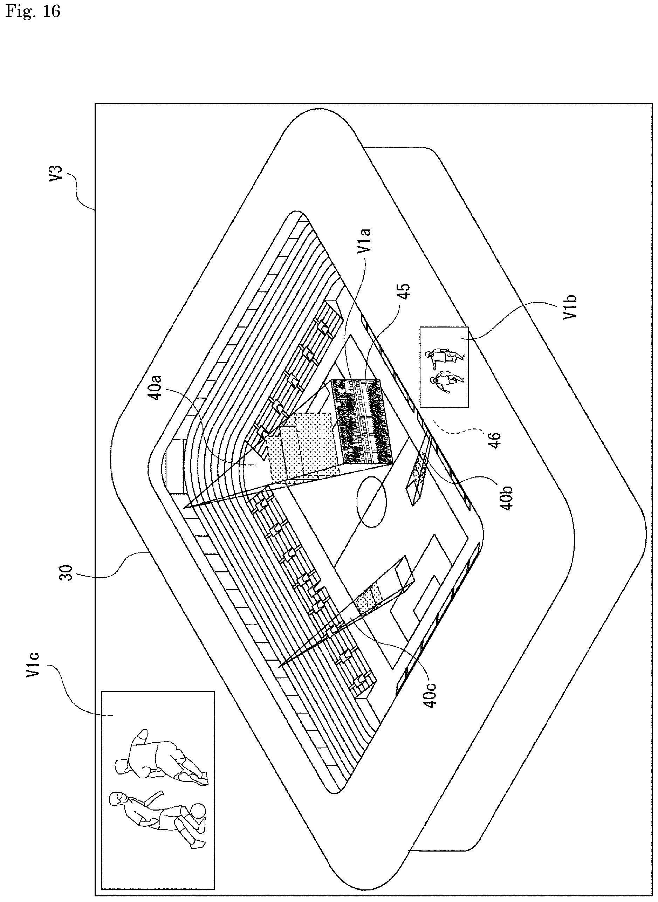

   Fig. 16 is an explanatory drawing illustrating overhead video including a plurality of view frustums according to the embodiment.
[Fig. 17]

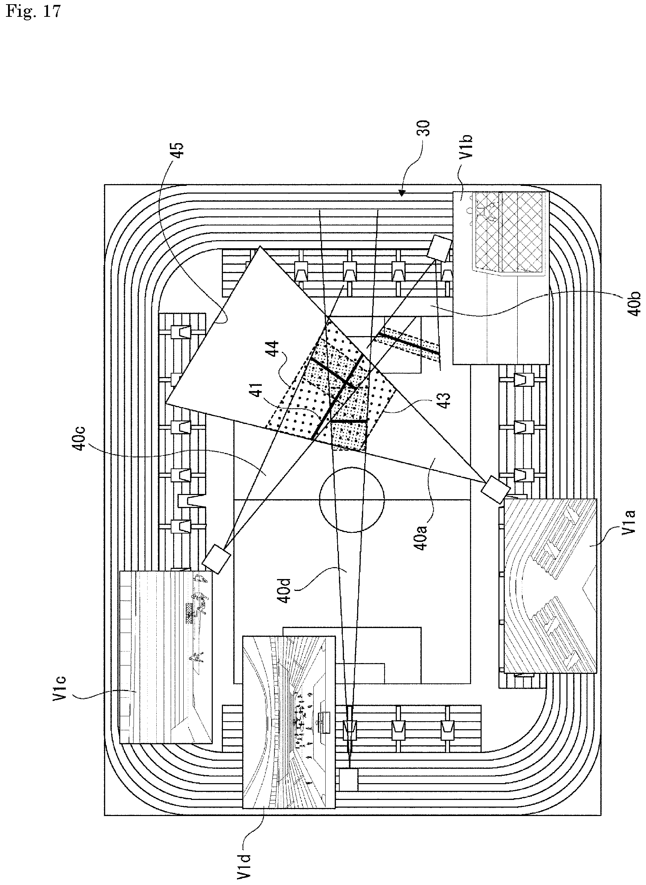

   Fig. 17 is an explanatory drawing illustrating overhead video including a plurality of view frustums according to the embodiment.
[Fig. 18]

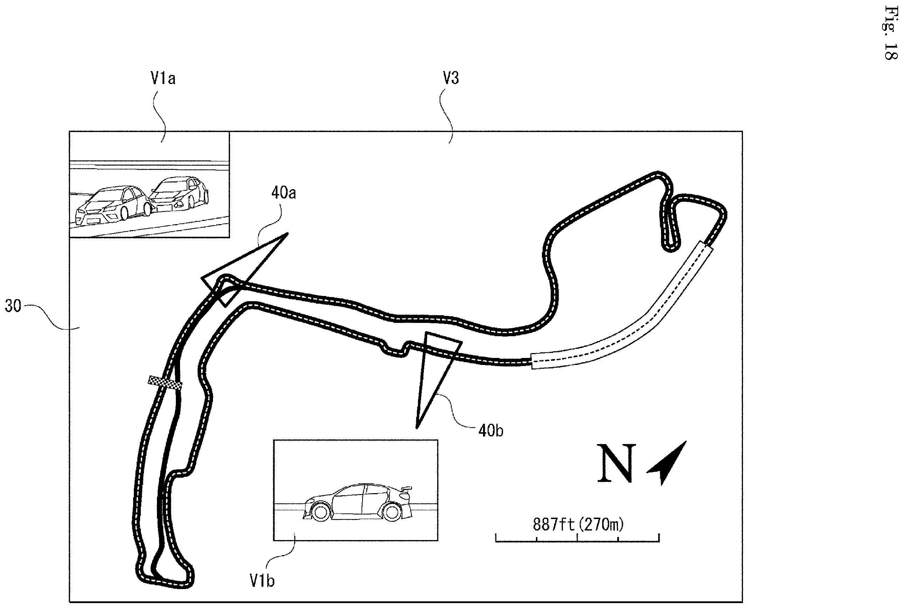

   Fig. 18 is an explanatory drawing illustrating overhead video including a plurality of view frustums according to the embodiment.
[Fig. 19]

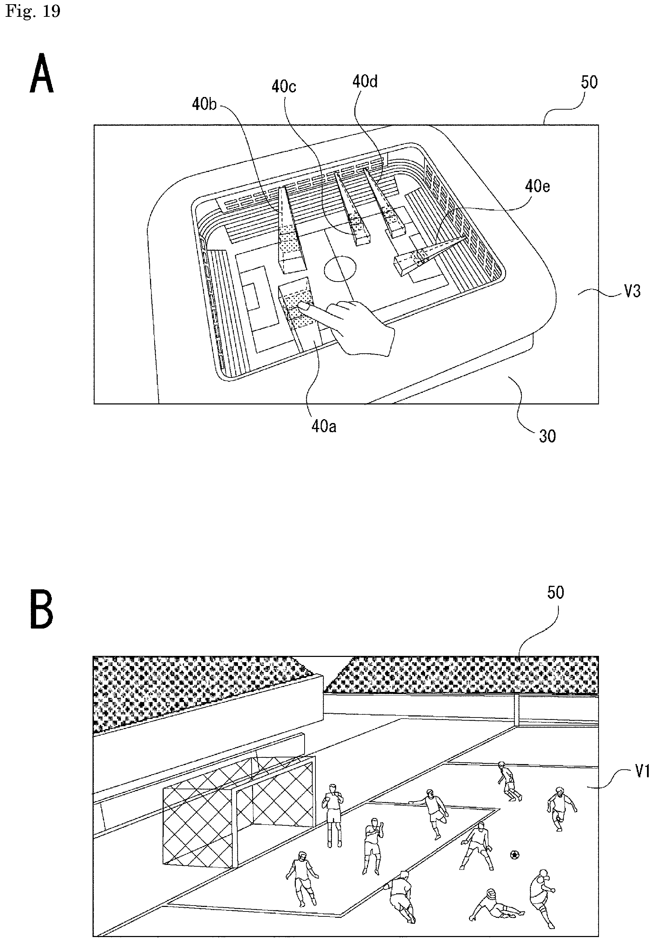

   Fig. 19 is an explanatory drawing of switching between the view frustum and shooting video according to the embodiment.
[Fig. 20]

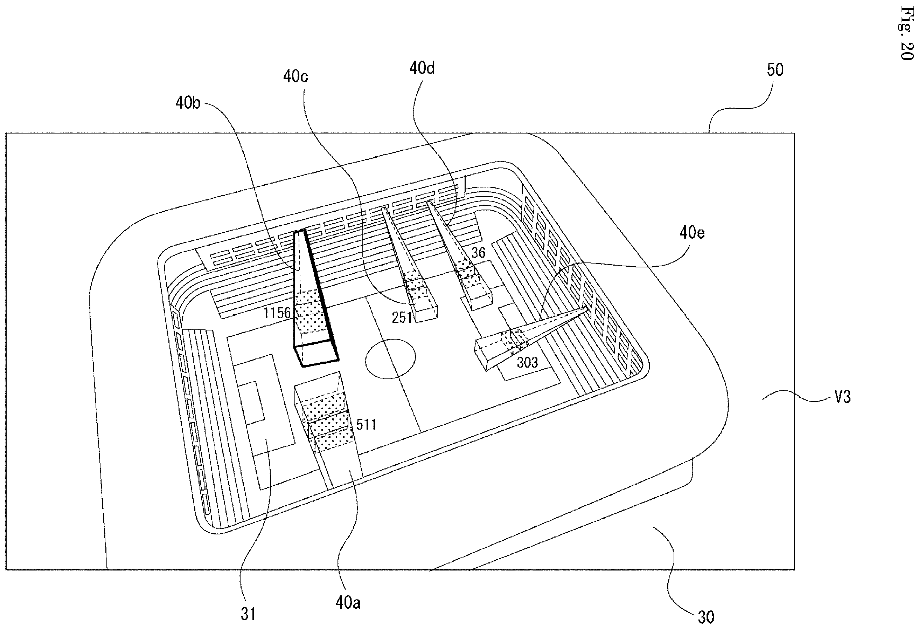

   Fig. 20 is an explanatory drawing illustrating a display example corresponding to observer information according to the embodiment.
[Fig. 21]

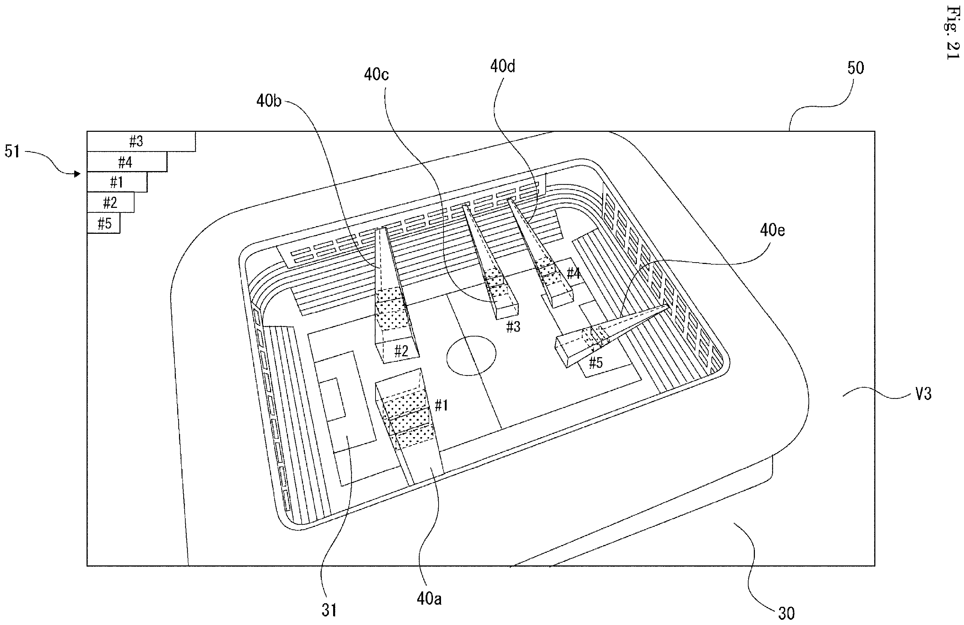

   Fig. 21 is an explanatory drawing illustrating a display example corresponding to the observer information according to the embodiment.
[Fig. 22]

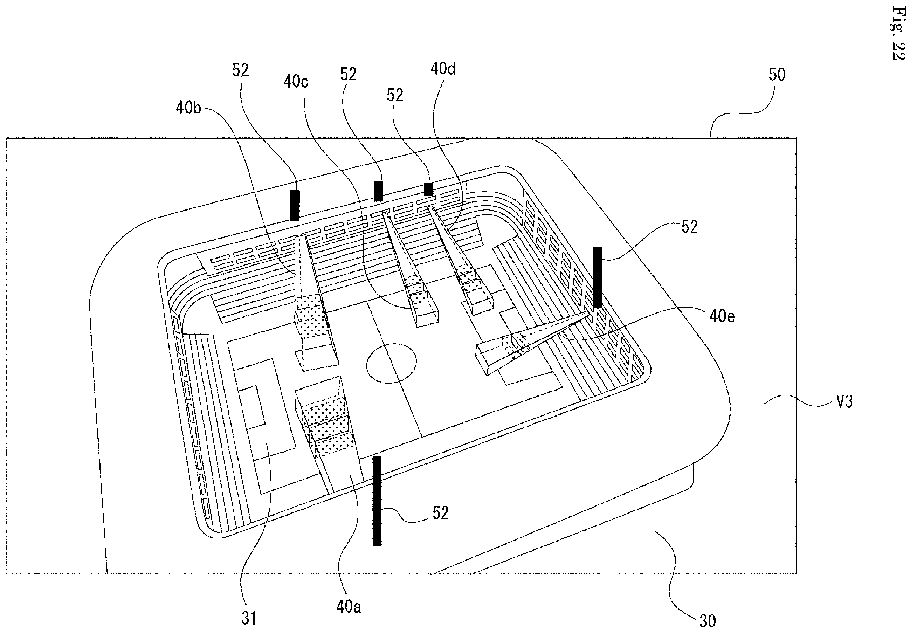

   Fig. 22 is an explanatory drawing illustrating a display example corresponding to the observer information according to the embodiment.
[Fig. 23]

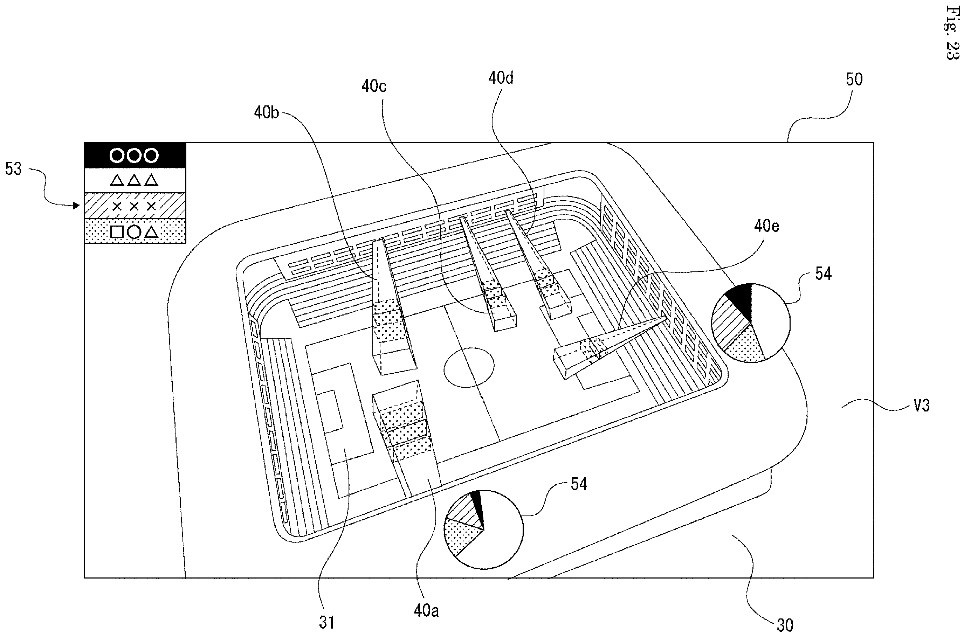

   Fig. 23 is an explanatory drawing illustrating a display example corresponding to the observer information according to the embodiment.
[Fig. 24]

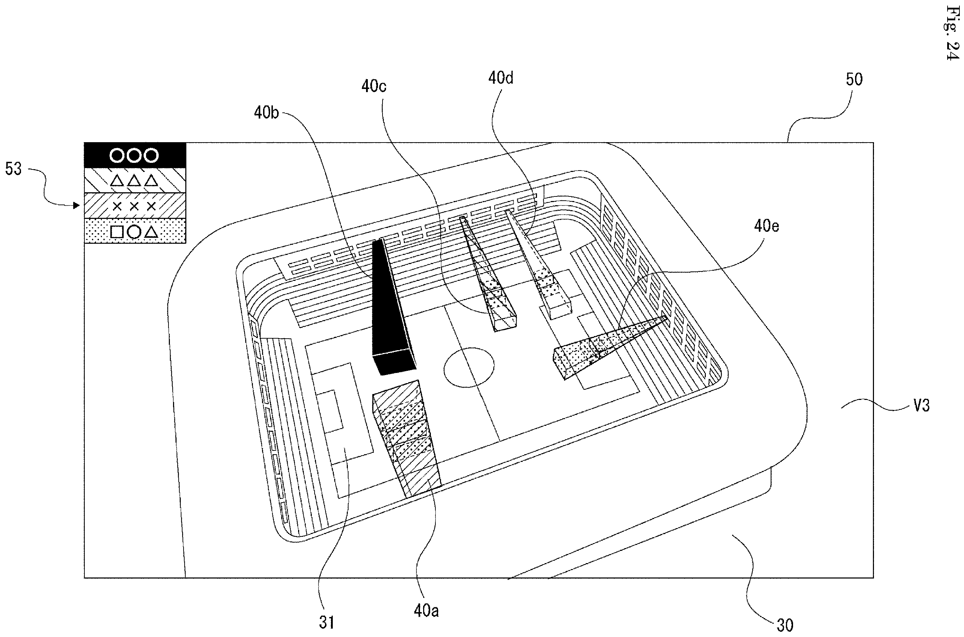

   Fig. 24 is an explanatory drawing illustrating a display example corresponding to the observer information according to the embodiment.
[Fig. 25]

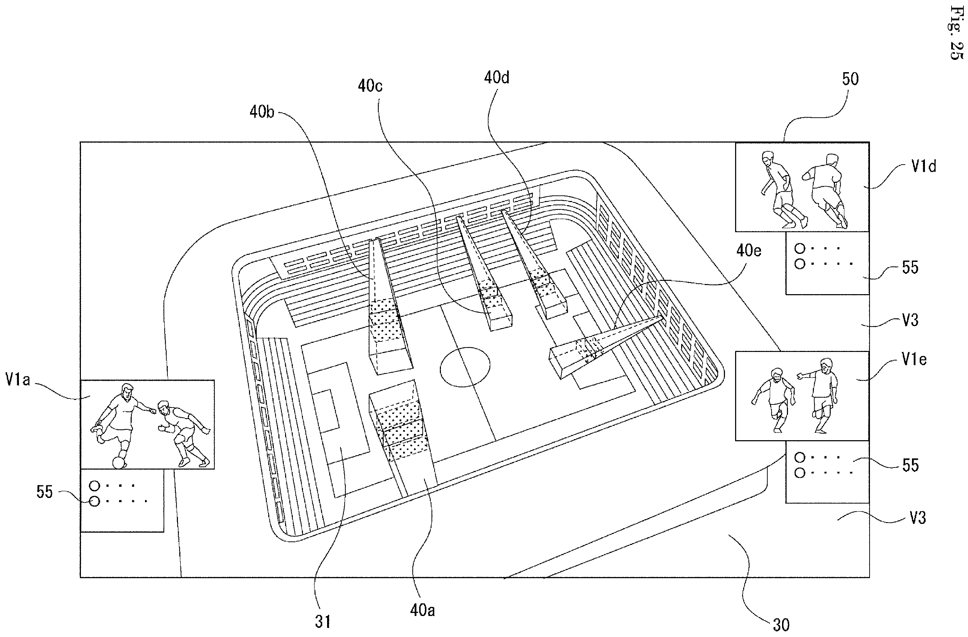

   Fig. 25 is an explanatory drawing illustrating a display example corresponding to the observer information according to the embodiment.
[Fig. 26]

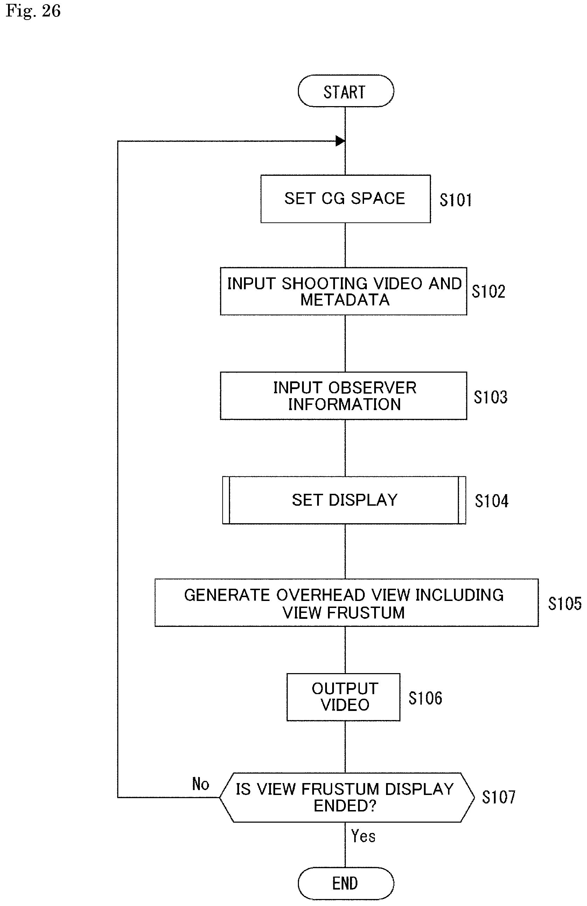

   Fig. 26 is a flowchart showing generation processing of overhead video including the view frustums according to the embodiment.
[Fig. 27]

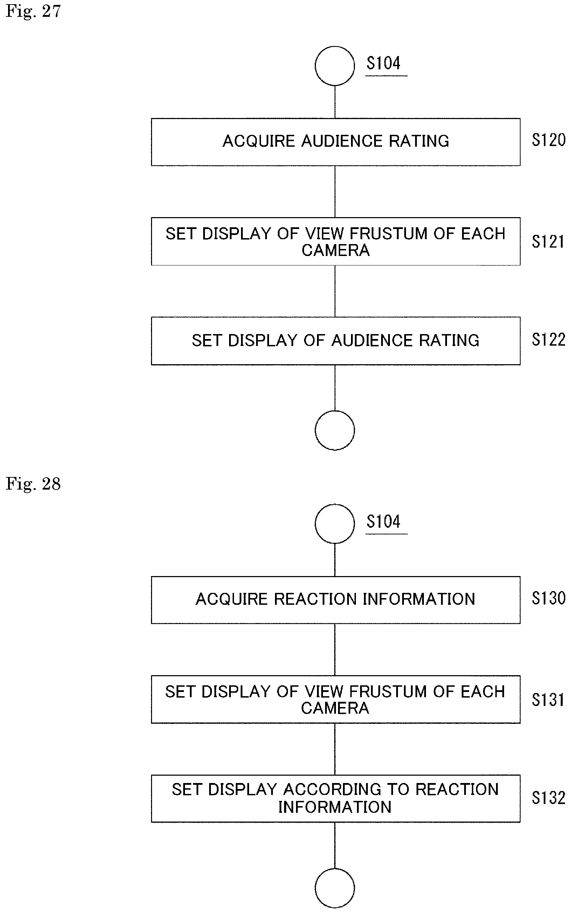

   Fig. 27 is a flowchart showing an example of display setting processing according to the embodiment.
[Fig. 28]
   Fig. 28 is a flowchart showing an example of display setting processing according to the embodiment.
[Fig. 29]

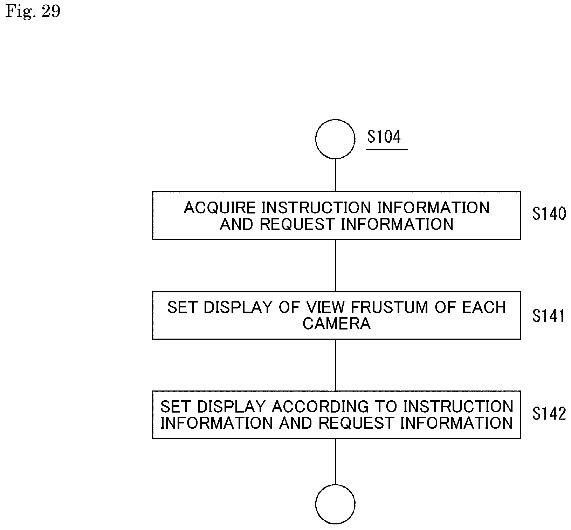

   Fig. 29 is a flowchart showing an example of display setting processing according to the embodiment.
[Fig. 30]

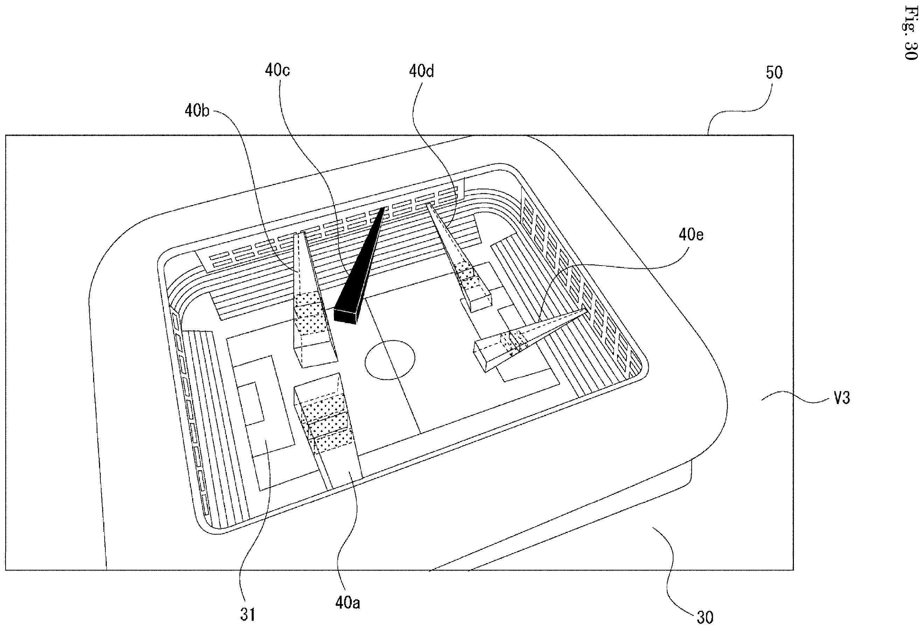

   Fig. 30 is an explanatory drawing illustrating a display example corresponding to right setting according to the embodiment.
[Fig. 31]

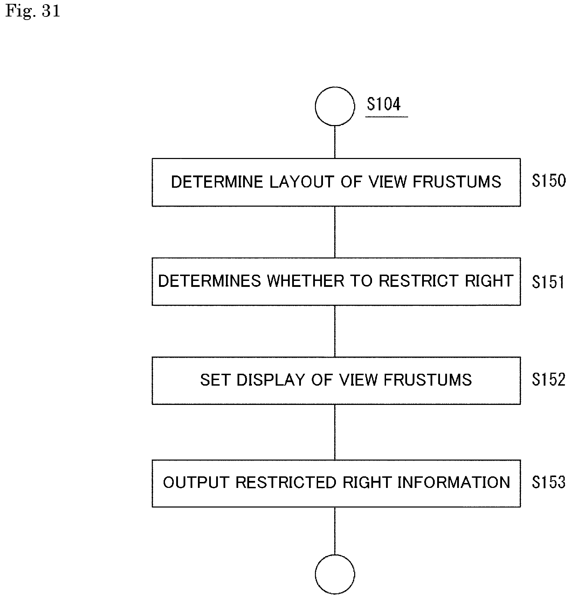

   Fig. 31 is a flowchart showing an example of display setting processing according to the embodiment.
[Fig. 32]

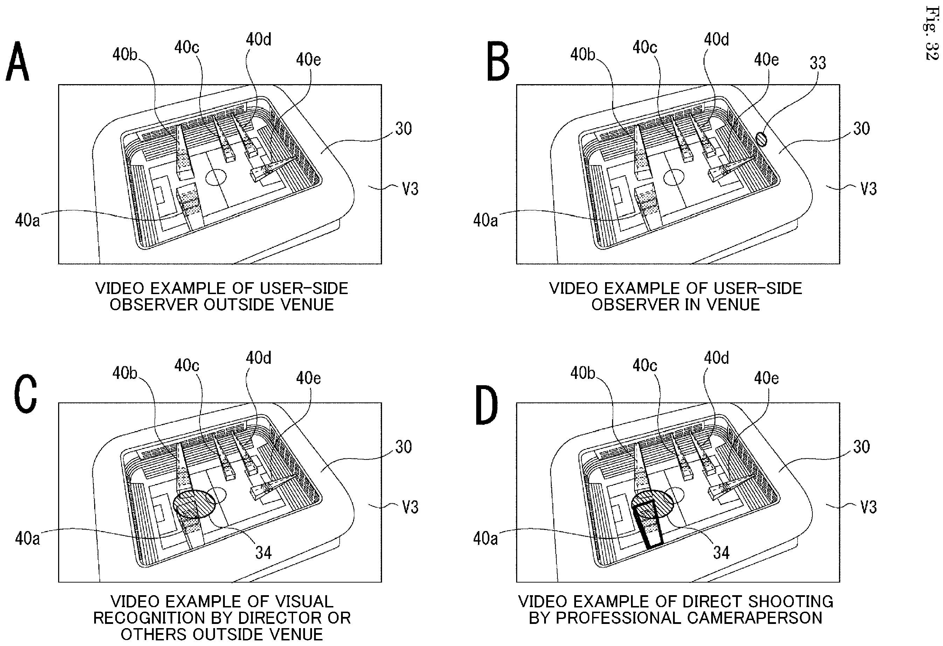

   Fig. 32 is an explanatory drawing illustrating display examples corresponding to observers according to the embodiment.
[Fig. 33]

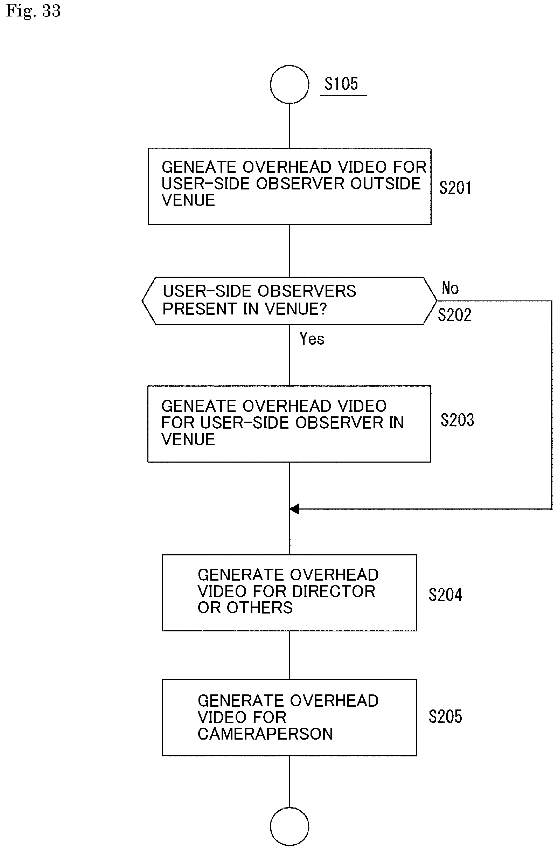

   Fig. 33 is a flowchart showing an example of video generation processing according to the embodiment.
[Fig. 34]

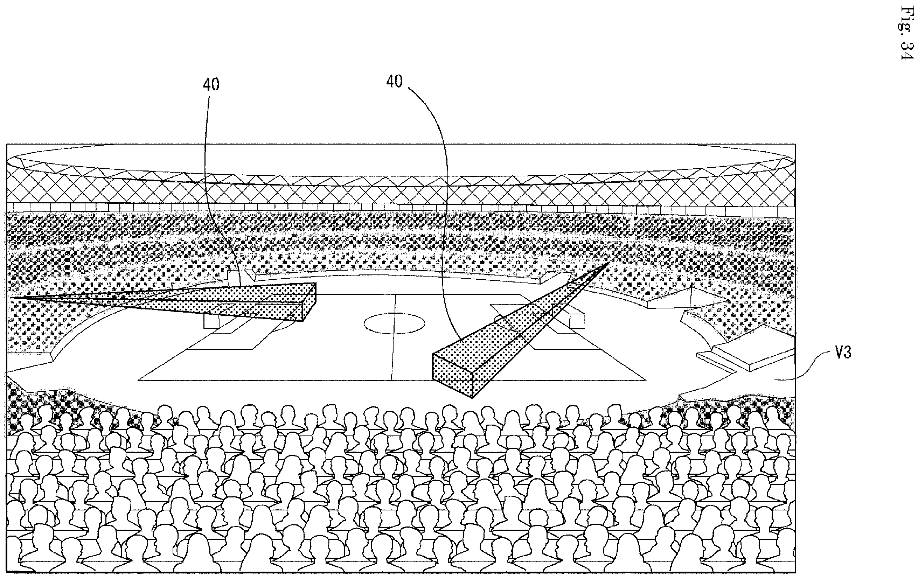

   Fig. 34 is an explanatory drawing illustrating a display example corresponding to the observer according to the embodiment.

### [Description of Embodiments]

An embodiment will be described below according to the following order.
<1. System configuration>
<2. Configuration of information processing device>
<3. Display of view frustum>
<4. Display for observer information>
<5. Display for shooting right>
<6. Other display examples>
<7. Summary and modification example>

In the present disclosure, "video" or "image" includes both of a moving image and a still image. However, the embodiment will mainly describe an example of video shooting.

Furthermore, in the present disclosure, an observer (viewer) refers to a person who can visually observe captured video. Some observers are, for example, user-side observers who are ordinary viewers of broadcast or distributed video while others are production-side observers who are staff members such as a director and a cameraperson on the video production side.

When observers need to be specified in the description, ordinary viewers of broadcast or distribution will be referred to as "user-side observers" while production-side observers will be referred to as "camerapersons" who operate cameras or "director or others."

"Cameraperson" refers to a person who operates a camera directly or remotely through a view finder or a monitoring device camera while "director or others" refers to a staff member, for example, a director or a switcher engineer other than a cameraperson.

### <1. System configuration>

In the embodiment, a shooting system 100 capable of generating so-called AR video by synthesizing virtual video with live-action video will be described as an example. Fig. 1 schematically illustrates a state of shooting by the shooting system.

Fig. 1 shows an example in which three cameras 2 are placed to photograph a real shooting target space 8. The three cameras are merely exemplary. The number of cameras 2 may be one or more.

The shooting target space 8 may be any location but is assumed to be an event venue or a shorts venue. A sports venue may be, for example, a stadium for soccer and rugby or an Olympic venue.

In the example of Fig. 1, a moving camera 2M hung from a wire 9 to move over the shooting target space 8 is illustrated as the camera 2. Video captured by the moving camera 2M and metadata are transmitted to a render node 7.

Furthermore, a stationary camera 2F secured with, for example, a tripod 6 is also illustrated as the camera 2. Video captured by the stationary camera 2F and metadata are transmitted to the render node 7 through a CCU (Camera Control Unit) 3.

In some cases, video captured by the moving camera 2M and metadata are also transmitted to a render node 7 through the CCU 3.

Hereinafter, "camera 2" is a generic name of the cameras 2F and 2M.

The render node 7 in this configuration represents a CG engine or a video processor that generates CG (Computer Graphics) and synthesizes the CG with a live-action video. The render node 7 is assumed to be a device for generating, for example, AR video.

Figs. 2A and 2B illustrate examples of AR video. In Fig. 2A, a line that does not actually exist is synthesized as a CG image 38 with a live-action video captured during a game at a stadium. In Fig. 2B, an advertisement logo that does not actually exist is synthesized as the image 38 with a live-action video in a stadium.

The CG images 38 can be rendered like real objects by properly setting the shapes, sizes, and synthesis positions of the images according to the positions, shooting directions, and angles of view of the cameras 2 during shooting and photographed structural objects or the like.

Synthesizing CG with live-action video to generate AR superimposition video is a known technique.

The shooting system 100 of the embodiment further allows observers including a user-side observer and a cameraperson or a director involved in video production to easily recognize the positions, directions, and angle of views of the cameras 2 during shooting. In addition, the shooting system 100 allows observers to recognize the status of all the observers.

Specifically, in the shooting system 100 capable of generating AR superimposition video, a user-side observer, a cameraperson, and a director and others are allowed to visually confirm shooting range presentation videos for the cameras 2.

Figs. 3 and 4 show two examples as configuration examples of the shooting system 100.

The configuration example of Fig. 3 illustrates camera systems 1 and 1A, a control panel 10, a GUI (Graphical User Interface) device 11, a network hub 12, a switcher 13, a master monitor 14, and a data management unit 15.

Dashed arrows show the flows of various control signals CS. Furthermore, solid arrows show the flows of video data including shooting video V1, AR superimposed video V2, and overhead video V3.

The camera system 1 is configured to perform AR cooperation, whereas the camera system 1A is configured not to perform AR cooperation.

In Figs. 3 and 4, the stationary camera 2F mounted on the tripod 6 is illustrated as an example of the camera 2. The moving cameras 2M may be used in the camera systems 1 and 1A.

The camera system 1 includes the camera 2, the CCU 3, an AI (artificial intelligence) board 4 built in, for example, the CCU 3, and an AR system 5.

From camera 2, the video data of the shooting video V1 and metadata MT are transmitted to the CCU 3. The CCU 3 transmits the video data of the shooting video V1 to the switcher 13. Moreover, the CCU 3 transmits the video data of the shooting video V1 and the metadata MT to the AR system 5.

The metadata MT is, for example, lens information including a zoom angle of view and a focal distance during shooting of the shooting video V1 and sensor information on the IMU (Inertial Measurement Unit) or the like mounted in the camera 2. Such information specifically includes attitude information such as the 3doF (Degree of Freedom) of the camera 2, acceleration information, the focal distance of the lens, an aperture, a zoom angle of view, and lens distortion. The metadata MT is output from the camera 2 as, for example, information synchronous or asynchronous to a frame.

In the case of Fig. 3, the camera 2 is the stationary camera 2F with non-changing position information, and thus camera position information may be stored as known values in the CCU 3 or the AR system 5 before the start of shooting. When the moving camera 2M is used, position information is also included in the metadata MT sequentially transmitted from the camera 2M.

The AR system 5 is an information processing device including a rendering engine for performing CG rendering. The information processing device as the AR system 5 is an example of the render node 7 shown in Fig. 1.

The AR system 5 generates the video data of the AR superimposed video V2 in which the image 38 generated by CG is superimposed on the shooting video V1 captured by the camera 2. In this case, the AR system 5 sets the size and shape of the image 38 with reference to the metadata MT and sets the position of synthesis in the shooting video V1, so that the video data of the AR superimposed video V2 is generated with the image 38 naturally synthesized with actual scenery.

Moreover, the AR system 5 generates the video data of the overhead video V3 by CG as will be described later. For example, the video data of the overhead video V3 includes the shooting target space 8 reproduced by CG as shown in Fig. 9, which will be described later. In addition, the AR system 5 displays a view frustum 40 in the overhead video V3 as shown in Fig. 11, which will be described later. The view frustum 40 is displayed as shooting range presentation video that visually presents the shooting range of the camera 2.

For example, the AR system 5 calculates a shooting range in the shooting target space 8 from the metadata MT and position information about the camera 2. The shooting range of the camera 2 can be determined by acquiring position information about the camera 2, an angle of view, and attitude information (corresponding to the shooting direction) about the camera 2 in three axial directions (yaw, pitch, roll) on the tripod 6.

The AR system 5 generates video as the view frustum 40 in response to the calculation of the shooting range of the camera 2. The AR system 5 generates the video data of the overhead video V3 such that the view frustum 40 is presented from the position of the camera 2 in the overhead video V3 corresponding to the shooting target space 8.

In the present disclosure, "overhead video" is video in an overhead view of the shooting target space 8. The video does not necessarily display the overall shooting target space 8. Video including at least the view frustums 40 of some of the cameras 2 and a space around the view frustum 40 will be referred to as "overhead video."

In the embodiment, the overhead video V3 is generated as video that represents the shooting target space 8 such as a stadium by CG. The overhead video V3 may be generated by live-action video. For example, the camera 2 is provided at a viewpoint for overhead video, and the shooting video V1 of the camera 2 may be used as the overhead video V3. The shooting video V1 of the camera 2M moving in the skies with the wire 9 may be used as the overhead video V3.

Furthermore, the 3D (three dimensions)-CG model of the shooting target space 8 is generated using the shooting video V1 of the cameras 2, and rendering is performed with a viewpoint position set for the 3D-CG model, so that the overhead video V3 can be generated with a variable viewpoint position.

Video data including the AR superimposed video V2 and the overhead video V3 in the AR system 5 is supplied to the switcher 13.

Moreover, video data including the AR superimposed video V2 and the overhead video V3 in the AR system 5 is supplied to the camera 2 through the CCU 3. Thus, the camera 2 allows a cameraperson to visually recognize the AR superimposed video V2 and the overhead video V3 on a display part such as a viewfinder.

Moreover, video data including the AR superimposed video V2 and the overhead video V3 in the AR system 5 may be supplied to the camera 2 without passing through the CCU 3. In other examples, the CCU 3 is not used in the camera systems 1 and 1A.

The AI board 4 in the CCU 3 performs processing for calculating the drift amount of the camera 2 from the shooting video V1 and the metadata MT.

At each point of time, a change of the position of the camera 2 is obtained by performing integration twice on acceleration information from the IMU mounted in the camera 2. A displacement at each point of time is accumulated from a reference origin attitude (reference attitude position of three axes of yaw, pitch, and roll), thereby obtaining attitude information corresponding to the positions of three axes of yaw, pitch, and roll at each point of time, that is, the shooting directions of the camera 2. However, repeated accumulations may increase a displacement (accumulative error) of an actual attitude position from a calculated attitude position. The amount of displacement is referred to as a drift amount.

In order to eliminate such a drift, the AI board 4 calculates a drift amount by using the shooting video V1 and the metadata MT. The calculated drift amount is transmitted to the camera 2.

In the camera 2, the attitude information about the camera 2 is corrected in response to the drift amount received from the CCU 3 (AI board 4). Thereafter, the metadata MT including the corrected attitude information is output.

Referring to Figs. 5 and 6, the foregoing drift correction will be described below.

Fig. 5 illustrates an environment map 35. The environment map 35 includes feature points and feature amounts that are stored at the coordinates of a virtual dome, and is generated for each of the cameras 2.

The camera 2 is rotated 360° to generate the environment map 35 in which feature points and feature amounts are registered at global position coordinates on a celestial sphere. This enables return even if the attitude is lost in feature point matching.

Fig. 6A schematically shows a state in which a drift amount DA appears between a shooting direction Pc of the correctly oriented camera 2 and a shooting direction Pj calculated from IMU data.

Information about operations, angles, and angles of view of three axes of the camera 2 is transmitted from the camera 2 to the AI board 4 as guides for feature point matching. As shown in Fig. 6B, the AI board 4 detects accumulated drift amounts DA by feature point matching of video recognition. "+" in Fig. 6B indicates the feature points of certain feature amounts registered in the environment map 35 and the feature points of feature amounts corresponding to the frame of the current shooting video V1, and an arrow between the feature points serves as a drift amount vector. In this way, a coordinate error is detected by feature point matching and then the coordinate error is corrected, so that the drift amount can be corrected.

The AI board 4 determines a drift amount by the feature point matching described above and the corrected metadata MT is transmitted from the camera 2 on the basis of the drift amount, thereby improving the accuracy of attitude information about the camera 2, the attitude information being detected on the basis of the metadata MT in the AR system 5.

In the example of Fig. 3, the camera system 1A includes the camera 2 and the CCU 3 but does not include the AR system 5. The video data of the shooting video V1 and the metadata MT are transmitted from the camera 2 of the camera system 1A to the CCU 3. The CCU 3 transmits the video data of the shooting video V1 to the switcher 13.

The video data of the shooting video V1, the AR superimposed video V2, and the overhead video V3 that are output from the camera systems 1 and 1A are supplied to the GUI device 11 though the switcher 13 and the network hub 12.

The switcher 13 selects so-called main-track video from the shooting video V1, the AR superimposed video V2, and the overhead video V3 that are captured by the cameras 2. The main-track video is video output for broadcasting or distribution. The switcher 13 outputs selected video data to a transmitter or a recorder, which is not illustrated, as the main-track video for broadcasting or distribution.

Video data of video selected as the main-track video is transmitted to the master monitor 14 and is displayed thereon. Thus, a staff member of video production can confirm the main-track video.

In addition to the main-track video, the AR superimposed video V2 and the overhead video V3 or the like may be displayed on the master monitor 14.

The control panel 10 is a device that allows a staff member of video production to provide an instruction to switch the switcher 13, an instruction for video processing, and various other instructions. The control panel 10 outputs the control signal CS in response to an operation of the staff member of video production. The control signal CS is transmitted to the switcher 13 and the camera systems 1 and 1A though the network hub 12.

The GUI device 11 is a device that is composed of, for example, a personal computer or a tablet and allows a staff member of video production, e.g., a director to confirm video and perform various instruction operations.

The shooting video V1, the AR superimposed video V2, and the overhead video V3 are displayed on the display screen of the GUI device 11. For example, a list of the shooting video V1 of the cameras 2 is displayed on a split screen, the AR superimposed video V2 is displayed, or the overhead video V3 is displayed on the GUI device 11. Alternatively, on the GUI device 11, video selected by the switcher 13 is displayed as main-track video.

In the GUI device 11, an interface for instruction operations by a director or others is also prepared. The GUI device 11 outputs the control signal CS in response to an operation of the director or others. The control signal CS is transmitted to the switcher 13 and the camera systems 1 and 1A though the network hub 12.

The GUI device 11 can also provide an instruction on, for example, the display mode of the view frustum 40 in the overhead video V3.

The control signal CS output in response to the instruction is transmitted to the AR system 5, and the AR system 5 generates video data of the overhead video V3 including the view frustum 40 in the display mode corresponding to the instruction of the director or others.

The data management unit 15 is an information processing device that performs data management processing including the reception, storage, and tabulation of various types of data FBD mainly transmitted from a terminal device 200 shown in Fig. 7. The various types of data FBD transmitted from the terminal device 200 refer to information about an observer (in this case, a user-side observer) of video broadcasted or distributed by the shooting system 100 and information based on feedback data provided by a user-side observer. For example, the data FBD includes information about audience ratings for the cameras 2 or the presence or absence of visual recognition for counting the audience ratings, reaction information including high ratings from user-side observers, request information, and chat data.

The data management unit 15 transmits observer information RI based on the data FBD to the AR system 5. The observer information RI refers to information about viewers and includes the data FBD, the totaled results of the data FBD, and information about calculation results using the data FBD.

On the basis of the observer information RI related to viewers, the AR system 5 can set the display modes of the view frustum 40 and the overhead video V3 to generate overhead video including the view frustum 40.

In addition, instruction information transmitted from the GUI device 11 or the control panel 10 to a cameraperson in response to an operation of the director or others is also transmitted to the AR system 5 as observer (in this case, the director or others) information included in the control signal CS. The instruction information is also an example of the observer information RI.

On the basis of the instruction information, a kind of observer information RI, the AR system 5 can set the display modes of the view frustum 40 and the overhead video V3 to generate overhead video including the view frustum 40.

In the example of Fig. 3, the camera systems 1 and 1A are provided. In this case, the camera system 1 includes a set of the camera 2, the CCU 3, and the AR system 5. The provision of the AR system 5, in particular, allows generation of the video data of the AR superimposed video V2 and the overhead video V3 that correspond to the shooting video V1 of the camera 2. Furthermore, the AR superimposed video V2 and the overhead video V3 are displayed on a display part such as the viewfinder of the camera 2, are displayed on the GUI device 11, or are selected as main-track video by the switcher 13.

In contrast, the camera system 1A does not generate the video data of the AR superimposed video V2 and the overhead video V3 that correspond to the shooting video V1 of the camera 2.

Thus, Fig. 3 shows a system in which the camera 2 for AR cooperation and the camera 2 for normal shooting are present.

An example in Fig. 4 is a system example in which one AR system 5 supports the cameras 2.

In the case of Fig. 4, multiple camera systems 1A are provided. The AR system 5 is provided independently of the camera systems 1A.

The CCU 3 in each of the camera system 1A transmits the video data of the shooting video V1 and the metadata MT from the camera 2 to the switcher 13. Furthermore, the video data of the shooting video V1 and the metadata MT are supplied from the switcher 13 to the AR system 5.

Thus, the AR system 5 can acquire the video data of the shooting video V1 and the metadata MT for each of the camera systems 1A and generate the video data of the AR superimposed video V2 corresponding to the shooting video V1 of each of the camera systems 1A and the video data of the overhead video V3 including the view frustum 40 corresponding to each of the camera systems 1A.

Alternatively, the AR system 5 can generate the video data of the overhead video V3 for collectively displaying the view frustums 40 of the cameras 2 of the camera systems 1A.

The video data of the AR superimposed video V2 and the overhead video V3 that are generated by the AR system 5 is transmitted to the CCU 3 of the camera system 1A though the switcher 13 and is further transmitted to the camera 2. Thus, the cameraperson can visually recognize the AR superimposed video V2 and the overhead video V3 on a display part such as the viewfinder of the camera 2.

Moreover, the video data of the AR superimposed video V2 and the overhead video V3 that are generated by the AR system 5 is transmitted to the GUI device 11 though the switcher 13 and the network hub 12 and is displayed on the GUI device 11. Thus, the director or others can visually recognize the AR superimposed video V2 and the overhead video V3.

The data management unit 15 supplies the observer information RI to the AR system 5. Thus, on the basis of the observer information RI, the AR system 5 can set the display modes of the view frustum 40 and the overhead video V3 to generate overhead video including the view frustum 40.

Furthermore, on the basis of the observer information RI (instruction information included in the control signal CS) from the GUI device 11 and the control panel 10, the data management unit 15 can set the display modes of the view frustum 40 and the overhead video V3 to generate overhead video including the view frustums 40.

In the configuration of Fig. 4, the AR superimposed video V2 of the cameras 2 and the overhead video V3 can be generated and displayed without providing the AR system 5 in each of the camera systems 1A.

In the shooting system 100 of Figs. 3 and 4, the shooting video V1, the AR superimposed video V2, and the overhead video V3 can be broadcasted or distributed for user-side observers.

As main-track video to be broadcasted or distributed, the shooting video V1 of one of the cameras 2 may be selected or the shooting videos V1 of the multiple cameras 2 may be selected to be selectively viewed by a user-side observer. The video is distributed as, for example, so-called multi-view video. Obviously, one or more AR superimposed videos V2 may be broadcasted or distributed instead of the shooting video V1. Furthermore, it is assumed that the overhead video V3 is also broadcasted or distributed in the present embodiment. Thus, the user-side observer can visually recognize the overhead video V3 including the view frustum 40.

Fig. 7 schematically illustrates devices visually recognized as the shooting system 100 and the terminal devices 200 by an observer.

The shooting system 100 is configured as shown in Figs. 3 and 4, including a cameraperson monitor 101 and a director monitor 102.

The cameraperson monitor 101 indicates a display device visually recognized by a cameraperson directly or remotely operating the camera 2, and refers to, for example, the viewfinder of the camera 2, a monitor screen attached to the camera 2, or a monitor display device owned by the cameraperson.

The director monitor 102 is a display device visually recognized by the director or others, that is, the GUI device 11, the master monitor 14, or other display devices.

The terminal device 200 is a device used for broadcasting or distribution by the user-side observer, that is, a personal computer, a smartphone, a tablet, a television unit, or other devices capable of displaying video.

Video data as the shooting video V1, the AR superimposed video V2, and the overhead video V3 is transmitted to the cameraperson monitor 101, the director monitor 102, and the terminal devices 200. The shooting video V1, the AR superimposed video V2, and the overhead video V3 can be visually confirmed in a selective manner or at the same time in response to a user operation or the like in the cameraperson monitor 101, the director monitor 102, and the terminal devices 200.

To the terminal devices 200, the shooting videos V1 (or AR superimposed videos V2) of the multiple cameras 2 can be transmitted. The user-side observer as a user of the terminal device 200 can select and visually recognize the shooting video V1 (or AR superimposed video V2) of any one of the cameras 2.

Moreover, the terminal device 200 includes a user interface, so that the user-side observer can send various reactions and requests from the terminal device 200. For example, the user-side observer can show reactions such as an evaluation of video or a comment entry for a chat or make a request asking view of a specific player. Reactions and request information are fed back as the observer information RI into the shooting system 100.

### <2. Configuration of information processing device>

Referring to Fig. 8, a configuration example of an information processing device 70 serving as, for example, the AR system 5 in the foregoing shooting system will be described below.

The information processing device 70 is, for example, a computer device capable of information processing, particularly video processing. Specifically, the information processing device 70 is assumed to be a personal computer, a work station, a portable terminal device, e.g., a smartphone or a tablet, or video editing equipment. Alternatively, the information processing device 70 may be a server device in cloud computing or a computer device configured as an arithmetic unit.

A CPU 71 of the information processing device 70 performs various kinds of processing according to a program stored in a ROM 72 or a nonvolatile memory unit 74, e.g., an EEP-ROM (Electrically Erasable Programmable Read-Only Memory) or a program loaded from a storage unit 79 to a RAM 73. In the RAM 73, data necessary for the CPU 71 to perform various kinds of processing is also stored as appropriate.

The CPU 71 is configured as a processor for performing various kinds of processing. The CPU 71 performs overall control processing or various kinds of arithmetic processing.

When the information processing device 70 functions as the AR system 5, the CPU 71 has a function as a video processing unit 71a that performs processing for generating the AR superimposed video V2 and the overhead video V3 on the basis of a program.

The video processing unit 71a indicates a processing function for performing various kinds of video processing. For example, the video processing unit 71a performs one or more of video processing including 3D model generation processing, rendering, and color/luminance adjustment processing, video edition processing, and video analysis/detection processing.

Moreover, the video processing unit 71a performs processing for generating, according to the observer information RI, video data of the overhead video V3 of the shooting target space 8 including the view frustum 40 presenting the shooting range of each of the cameras 2. For example, the video processing unit 71a sets the display mode of the view frustum 40 according to the observer information RI. Furthermore, for example, the video processing unit 71a sets display contents to be displayed in association with the view frustum 40 according to the observer information RI.

The video processing unit 71a can also perform processing for generating the overhead video V3 as video data for simultaneously displaying the overhead video V3 of the shooting target space 8, the view frustum 40 presenting the shooting range of the camera 2 in the overhead video V3, and the shooting video V1 of the camera 2 in one screen.

The functions as the video processing unit 71a and a video generation control unit 71b can also be implemented by a CPU different from the CPU 71, a GPU (Graphics Processing Unit), a GPGPU (General-purpose computing on graphics processing units), or an AI (artificial intelligence) processor and the like.

Alternatively, the processing function as the video processing unit 71a may be implemented by a plurality of processors.

The CPU 71, the ROM 72, the RAM 73, and the nonvolatile memory unit 74 are connected to one another via a bus 83. An input/output interface 75 is also connected to the bus 83.

An input unit 76 including an operator or an operating device is connected to the input/output interface 75. For example, the input unit 76 is assumed to be various operators or operating devices such as a keyboard, a mouse, a key, a trackball, a dial, a touch panel, a touch pad, and a remote controller.

A user operation is detected by the input unit 76 and a signal corresponding to an input operation is translated by the CPU 71.

The input unit 76 is also assumed to be a microphone. A user's voice may be input as operation information.

Moreover, a display unit 77 including a LCD (Liquid Crystal Display) or an organic EL (electro-luminescence) panel and a sound output unit 78 including a speaker are integrally or separately connected to the input/output interface 75. The display unit 77 is a display unit that provides various kinds of display, and is configured with, for example, a display device provided in the housing of the information processing device 70 or a separate display device connected to the information processing device 70.

The display unit 77 displays various images, operation menus, icons, and messages as a GUI (Graphical User Interface) in response to instructions from the CPU 71.

In some cases, the storage unit 79 including an HDD (Hard Disk Drive) and a solid state memory and a communication unit 80 are connected to the input/output interface 75.

The storage unit 79 can store various types of data and programs. A database can also be configured in the storage unit 79.

The communication unit 80 performs communication processing via a transmission line such as the Internet, and communications such as wired/wireless communications and bus communications with various devices in an external database, an edition device, and an information processing device. For example, on the assumption that the information processing device 70 serves as the AR system 5, the communication unit 80 communicates with the CCU 3, the switcher 13, and the data management unit 15. Thus, the observer information RI is received, the control signal CS is received, the shooting video V1 is received, the overhead video V3 is received, and the AR superimposed video V2 is transmitted.

A drive 81 is also connected to the input/output interface 75 as necessary, and a removable recording medium 82, e.g., a magnetic disk, an optical disc, a magnetooptical disc, or a semiconductor memory is loaded thereon, as appropriate.

The drive 81 enables reading of video data and various computer programs or the like from the removable recording medium 82. The read data is stored in the storage unit 79, or video and sound included in the data are output from the display unit 77 and the sound output unit 78. A computer program or the like read from the removable recording medium 82 is installed onto the storage unit 79 as necessary.

In the information processing device 70, for example, software for processing in the present embodiment can be installed through network communications using the communication unit 80 or via the removable recording medium 82. Alternatively, the software may be stored in advance in the ROM 72 or the storage unit 79 or the like.

Moreover, devices such as the GUI device 11, the data management unit 15, the control panel 10, the CCU 3, and the camera 2 in Figs. 3 and 4 and the terminal devices 200 in Fig. 7 may also have hardware configurations as in Fig. 8.

### <3. Display of view frustum>

The display of the view frustum 40 will be described below. As described above, the AR system 5 can generate the overhead video V3 and transmit the overhead video V3 to the terminal device 200, the viewfinder of the camera 2, and the GUI device 11 to display the overhead video V3. The AR system 5 generates the video data of the overhead video V3 such that the view frustum 40 of the cameras 2 is displayed in the overhead video V3.

Fig. 9 shows an example of the overhead video V3 when the plurality of cameras 2 in the shooting system 100 capture images of the shooting target space 8.

In the example of Fig. 9, the overhead video V3 is displayed over a display screen 50. The display screen 50 is assumed to be, for example, the display screen of the terminal device 200, the display screen of the GUI device 11, or the viewfinder of the camera 2.

The overhead video V3 is video of a CG space representing, for example, a stadium viewed from a certain point of view. In this video, view frustums 40a, 40b, 40c, 40d, and 40e are added so as to correspond to the actual positions of the cameras 2.

In the present disclosure, the view frustums 40a, 40b, and the like are collectively represented as "view frustum 40."

As illustrated in Fig. 9, the overhead video V3 including the view frustum 40 can be displayed over the display screen 50. For example, the overhead video V3 is switched to the shooting video V1 or the AR superimposed video V2 and is displayed on the display screen 50.

Furthermore, as illustrated in Fig. 10, the overhead video V3 may be displayed with the shooting video V1 or the AR superimposed video V2 by screen splitting on the display screen 50.

The view frustum 40 will be described below.

Fig. 11 shows an example of the view frustum 40 displayed in the overhead video V3. Fig. 11 is a simplified view of an area around the view frustum 40 as a part of overhead video of Fig. 9 illustrating the shooting target space 8 of Fig. 1.

The overhead video V3 includes video representing a background 31 such as a stadium and persons 32 such as a player. In Fig. 11, the cameras 2 are illustrated for the sake of explanation. The image of the camera 2 may be included or omitted in the overhead video V3.

The view frustum 40 visually presents the shooting range of the camera 2 in the overhead video V3 and is shaped like a quadrangular pyramid extending in the direction of the shooting optical axis with a frustum starting point 46 located at the position of the camera 2 in the overhead video V3. For example, the quadrangular pyramid extends from the frustum starting point 46 to a frustum far-end face 45.

The view frustum is shaped like a quadrangular pyramid because the image sensor of the camera 2 is quadrilateral.

The degree of extension of the quadrangular pyramid changes according to the field of view of the camera 2 at that time. Thus, the range of the quadrangular pyramid indicated by the view frustum 40 is the shooting range of the camera 2. In reality, it is assumed that the view frustum 40 is represented as, for example, translucent video of a quadrangular pyramid.

In the view frustum 40, a focus plane 41 and a depth-of-field range 42 at that time are displayed in the quadrangular pyramid. As the depth-of-field range 42, for example, the range from a depth near-end face 43 to a depth far-end face 44 is represented by a different translucent color.

Moreover, the focus plane 41 is also represented by a different translucent color.

The focus plane 41 indicates the depth position where the camera 2 focuses at that time. In other words, displaying the focus plane 41 allows a confirmation that a subject at the same depth (distance in the depth direction when viewed from the camera 2) as the focus plane 41 has been brought into focus. Furthermore, the range where the subject is unblurred can be confirmed in the depth direction by the depth-of-field range 42.

The depth of focus and the depth of field vary depending on a focus operation and an aperture operation of the camera 2. Therefore, the focus plane 41 and the depth-of-field range 42 in the view frustum 40 vary each time.

The AR system 5 can set, for example, the extending shape of the quadrangular pyramid of the view frustum 40, the display position of the focus plane 41, and the display position of the depth-of-field range 42 by acquiring the metadata MT including information such as a focal distance, an aperture, and an angle of view from the camera 2. Furthermore, the metadata MT includes attitude information about the camera 2, allowing the AR system 5 to set the direction of the view frustum 40 from the camera position (frustum starting point 46) in the overhead video V3.

The AR system 5 may display the shooting video V1 that is captured by the camera 2 and indicates the view frustum 40, along with the view frustum 40 in the overhead video V3.

In other words, the AR system 5 can generate the video of a CG space 30 for the overhead video V3, synthesize, with the video of the CG space 30, the view frustum 40 generated on the basis of the metadata MT supplied from the camera 2, and further synthesize the shooting video V1 captured by the camera 2. The video data of such synthetic video is output as the overhead video V3.

In the following example, the AR system 5 generates the video data of the overhead video V3, in which the shooting video V1 is located in the view frustum 40, as an example of simultaneous display of the view frustum 40 and the shooting video V1.

Fig. 12 shows an example of the shooting video V1 displayed on the focus plane 41 in the view frustum 40. Thus, video captured at the focus position can be visually recognized.

Fig. 13 shows an example of the shooting video V1 displayed on a plane other than the focus plane 41 in the depth-of-field range 42 in the view frustum 40. In the example of Fig. 13, the shooting video V1 is displayed on the depth far-end face 44.

In other examples, the shooting video V1 may be displayed on the depth near-end face 43 or may be displayed at a depth position in the depth-of-field range 42.

Fig. 14 shows an example of the shooting video V1 displayed at a position (frustum starting-point neighboring plane 47) closer to the frustum starting point 46 than the depth near-end face 43 of the depth-of-field range 42 in the view frustum 40. Considering display in the view frustum 40, the shooting video V1 decreases in size toward the frustum starting point 46. However, displaying on the frustum starting-point neighboring plane 47 facilitates visual recognition of the focus plane 41 and the depth-of-field range 42 or the like.

Fig. 15 shows an example of the shooting video V1 displayed at a position farther than the depth far-end face 44 of the depth-of-field range 42 in the view frustum 40. "Farther" means a farther place when viewed from the camera 2 (frustum starting point 46).

In the example of Fig. 15, the shooting video V1 is displayed on the frustum far-end face 45 located on the far side.

When the shooting video V1 is displayed at a position farther than the depth-of-field range 42 in the view frustum 40, the area of the shooting video V1 can be increased. Thus, such display is preferable when the position of the focus plane 41 or the depth-of-field range 42 is to be confirmed while confirming the contents of the shooting video V1.

In the foregoing example, the shooting video V1 is displayed in the view frustum 40. The shooting video V1 may be displayed at a position outside the view frustum 40 in the same screen as the overhead video V3.

In the example of Fig. 16, the view frustums 40a, 40b, and 40c corresponding to the three cameras 2 are displayed in the overhead video V3. Furthermore, shooting videos V1a, V1b, and V1c corresponding to the view frustums 40a, 40b, and 40c are also displayed.

The shooting video V1a is displayed on the frustum far-end face 45 of the view frustum 40a. The shooting video V1b is displayed near the frustum starting point 46 (near the camera position) of the view frustum 40b.

The shooting video V1c is displayed at a corner of the screen. In addition, the shooting video V1c is displayed at the upper left corner close to the view frustum 40c among the four corners of the overhead video V3.

For example, when the shooting video V1 is displayed at a position outside the view frustum 40 like the shooting videos V1b and V1c, the shooting video V1 is preferably displayed near the camera 2 (or the frustum starting point 46). Thus, the relationship between the camera 2 and the shooting video V1 captured by the camera 2 is made understandable.

In particular, in the case of the production of sports video or the like, it is assumed that the view frustums 40 of the multiple cameras 2 are displayed in the overhead video V3 as shown in Fig. 16. In such a case, when the relationship between the view frustum 40 and the shooting video V1 is not clear, it is expected that an observer will be confused. Hence, the shooting video V1 of one of the cameras 2 is preferably displayed near the view frustum 40 of the camera 2.

Alternatively, in order to clarify the correspondence, the shooting video V1 may be located near the focus plane 41 of the view frustum 40 of the camera 2 or near the frustum far-end face 45.

However, depending on a structure or the like in the overhead video V3, the direction and angle of the view frustum 40, or the positional relationship between the view frustums 40, the shooting video V1 may not be displayed at the vicinity of the view frustum 40 or the correspondence may become unclear.

Hence, the correspondence may be indicated by matching, for example, the frame color of the shooting video V1 with the translucent color of the corresponding view frustum 40 or the color of the edge line.

For example, in the case of the moving camera 2M, the view frustum 40 changes larger than the view frustum 40 of the stationary camera 2. Thus, the shooting video V1 of the moving camera 2 may be fixed and displayed at a corner of the screen.

Fig. 16 shows an example of the overhead video V3 of the shooting target space 8 viewed from diagonally above. As shown in Fig. 17, the AR system 5 may display a plan view of the overhead video V3 from above.

In this example, cameras 2a, 2b, 2c, and 2d, view frustums 40a, 40b, 40c, and 40d for the respective cameras, and shooting videos V1a, V1b, V1c, and V1d are displayed in the overhead video V3.

The shooting videos V1a, V1b, V1c, and V1d are displayed near the respective cameras 2a, 2b, 2c, and 2d.

The AR system 5 may be configured such that the position of the point of view of the overhead video V3 shown in Figs. 16 and 17 is continuously changed by operating the terminal device 200 or the GUI device 11 or the like by an observer.

Fig. 18 shows another example of the overhead video V3. In the overhead video V3 representing a motor racecourse by CG, the view frustums 40a and 40b are displayed and the shooting videos V1a and V1b captured by the cameras 2 for the view frustums 40a and 40b are displayed at the screen corners or near the camera positions.

For example, in the case of shooting of a race, a shooting location in the course is unlikely to be identified only by the shooting video V1. However, the relationship is clarified by displaying the overhead video V3, the view frustum 40, and the shooting video V1 at the same time.

In particular, when the multiple cameras 2 are located in the course, the state of shooting is made recognizable by displaying the view frustums 40 and the shooting videos V1 as in the illustrated example.

As illustrated in Figs. 9 to 18, the AR system 5 displays the view frustum 40 of the camera 2 in the overhead video V3 of the CG space 30. In some cases, the video data of the overhead video V3 is generated such that the shooting video V1 of the camera 2 is also displayed at the same time. The overhead video V3 generated thus is displayed on the terminal device 200, the camera 2, or the GUI device 11, so that a user-side observer, a cameraperson, and a director or others can easily recognize the state of shooting.

For example, the view frustum 40 and the shooting video V1 are displayed in the CG space 30, thereby specifying the correspondence between the shooting video V1 of the camera 2 and a spatial position. This allows an observer to easily recognize the correspondence between the shooting video V1 of the camera 2 and a position in the shooting target space 8.

In addition, the observer can easily recognize a subject captured by the camera 2 or the focal point.

The shooting video V1 captured by the camera 2 for the view frustum 40 may be displayed as in Fig. 19B by selecting the view frustum 40 on the display screen 50 by a user-side observer, a cameraperson, or a director or others with a touching operation or a mouse cursor as illustrated in Fig. 19A.

Thus, for example, a user-side observer can also select the desired camera 2 from the overhead video V3 to switch video to be visually recognized. In particular, the shooting direction and position of the camera 2 are identified by the view frustum 40, allowing the user-side observer to easily select desired video.

### <4. Display for observer information>

In the present embodiment, the AR system 5 performs processing for setting the view frustum 40 or the display mode or display contents of the overhead video V3 according to information about observers (observer information RI). The processing will be described below.

Fig. 20 shows a display example of the view frustums 40a, 40b, 40c, 40d, and 40e in the overhead video V3.

The five cameras 2 corresponding to the view frustums 40 may belong to a video content production team or different video content producers. For example, some of the cameras 2 may belong to a broadcaster while others may belong to amateur camerapersons. Broadcasting or distribution may be provided independently by some or all of the cameras 2. For example, some amateur camerapersons may distribute video by using an SNS (Social networking service) or a video streaming website or the like.

Also when a video content production team uses the multiple cameras 2, the director or others of the video content production team may select one video and broadcast or distribute the video as main-track video or distribute a plurality of videos to perform so-called multi-view distribution in which video at a favorite angle can be selected and visually confirmed by the user-side observer.

However, in any case, the AR system 5 is allowed to acquire position information and the metadata MT about the cameras 2 and the observer information RI provided by broadcasting and distribution through the cameras 2, thereby generating the view frustums 40 for the cameras 2.

In the example of Fig. 20, the AR system 5 highlights the view frustum 40b more than the other view frustums 40a, 40c, 40d, and 40e.

For example, the AR system 5 confirms information about the audience rating of the shooting video V1 for each of the cameras 2 on the basis of the observer information RI. Thereafter, the shooting video V1 with the highest audience rating is highlighted.

Provided as the display mode for highlighting the view frustum 40 are, for example, an example of a specific highlighted color, an example of increased luminance, an example of transparency reduced to increase visibility, an example of blinking, an example of an enhanced edge or the like, and an example of patterning.

In addition to the selection of the view frustum 40 to be highlighted simply according to the audience rating, the AR system 5 may perform various condition settings to select the view frustum 40 to be highlighted. In some examples, the view frustum 40 to be highlighted is selected as the observer information RI according to the attributes of the user-side observer, for example, the age, the place of residence, the sex, and preferences (including a team supported by the observer and favorite players).

For the user-side observer, attribute information is preregistered according to user identification information (user ID). For the observer information RI, the AR system 5 extracts information about a user ID having specific attribute information and determines the shooting video V1 visually recognized by each observer having the attribute. Thereafter, the shooting video V1 with the highest audience rating is determined and the corresponding view frustum 40 is highlighted.

Thus, for example, "the camera capturing video with a high audience rating from user-side observers supporting team A," "the camera capturing video frequently watched by the supporters of player B," "the camera capturing video frequently watched by people in their thirties," and "the camera capturing video frequently watched by the residents of district C" can be presented by highlighting the view frustums 40.

Moreover, the observer information RI may be extracted depending on the condition of the current position of each user-side observer. For example, the AR system 5 acquires position information about the terminal device 200 and extracts, from the observer information RI, information about the user-side observer in a stadium as a competition site. Thereafter, the shooting video V1 with the highest audience rating is determined from the videos and the corresponding view frustum 40 is highlighted. Thus, the camera 2 capturing video frequently watched by viewers at the venue can be presented by the overhead video V3.

The view frustum 40 to be highlighted is not limited to one view frustum. For example, the view frustums 40 of the two cameras 2 with top audience ratings may be highlighted.

Furthermore, a criterion for highlighting is not limited to an audience rating. For example, the view frustum 40 of the camera 2 of the shooting video V1 having received multiple reactions from user-side observers may be highlighted. Reactions include an evaluation of video contents by user-side observers, for example, an operation of "like" for high ratings or an operation for low ratings, an operation of tipping to video contents, and chat comments about video contents.

The AR system 5 may highlight the view frustum 40 of the camera 2 capturing video having received multiple high ratings.

The AR system 5 may highlight the view frustum 40 of the camera 2 capturing video having received multiple low ratings.

The AR system 5 may highlight the view frustum 40 of the camera 2 capturing video having received multiple tips or reached a large total amount.

The AR system 5 may highlight the view frustum 40 of the camera 2 capturing video having received multiple chat comments. Moreover, the AR system 5 may analyze the contents of chat comments and highlight the view frustum 40 of the camera 2 capturing video having received multiple positive comments or video having received multiple negative comments.

Furthermore, the AR system 5 may perform highlighting such as blinking in a limited period of time when a rating operation, a chat post, or tipping occurs.

In the example of Fig. 20, numbers are indicated near the view frustums 40. These numbers are assigned to videos corresponding to the view frustums 40. For example, it is assumed that the AR system 5 displays the number of observers, the number of high ratings, the number of chat comments, and the amount of tips near the view frustums 40 or in the view frustums 40.

Fig. 21 shows an example in which a count bar 51 is displayed on the basis of the observer information RI.

For example, identifiers such as "#1" to "#5" are displayed for the respective view frustums 40a, 40b, 40c, 40d, and 40e, and the numeric values of "#1" to "#5" are represented by bar lengths on the count bar 51. This specifies the relationship between the bars of the count bar 51 and the view frustums 40.

When the view frustums 40 are displayed in different colors, the relationship between the bars of the count bar 51 and the view frustums 40 may be specified by matching the colors of the view frustums 40 with the colors of the corresponding bars in the count bar 51.

The bars of the count bar 51 are assigned with numeric values determined on the basis of the observer information RI. For example, the audience rating, the number of high ratings, the number of low ratings, the number of chat comments, the number of positive chat comments, the number of negative chat comments, the number of tips, and the total amount of tips for the shooting video V1 of the corresponding camera 2 are represented as lengths by the bars of the count bar 51.

An observer may set or switch the type of numeric values indicated by the count bar 51. Alternatively, the multiple count bars 51 may be displayed for each type of numeric value.

Fig. 22 shows an example in which poles 52 are displayed on the basis of the observer information RI.

For example, the poles 52 are displayed near the positions of the cameras 2 for the respective view frustums 40a, 40b, 40c, 40d, and 40e. The height of the pole 52 represents a numeric value.

Specifically, the audience rating, the number of high ratings, the number of low ratings, the number of chat comments, the number of positive chat comments, the number of negative chat comments, the number of tips, and the total amount of tips for the shooting video V1 of the corresponding camera 2 are represented as heights by the poles 52.

An observer may set or switch the type of numeric values indicated by the poles 52. Alternatively, at the position of one of the cameras 2, the multiple poles 52 may be displayed for each type of numeric value.

The viewpoint position of the shooting video V1 of each camera is made noticeable by locating the pole 52 near the camera 2.

The display provided in Figs. 21 and 22 can present the state of the user-side observer for the video of the camera 2. Obviously, numeric values in such cases may be numeric values as a result of extraction corresponding to the attributes or the current location of the user-side observer.

Fig. 23 shows an example of display provided according to request information in the observer information RI.

From the terminal device 200, the user-side observer can request, for example, a player to be viewed, a location to be viewed (e.g., a location near a soccer goal or in the center circle), and a shooting direction for the camera 2 of visually recognized video or any one of the cameras 2. The observer information RI including the request information is acquired to generate the overhead video V3 shown in Fig. 23.

In this example, the AR system 5 displays request contents 53 in the overhead video V3 and displays circle graphs 54 near some or all of the view frustums 40.

In the request contents 53, for example, player's names and locations are displayed in different colors. Alternatively, in an athletic field where multiple events are held in the respective locations, the locations and names of events such as "track," "hammer throw," and "running jump" may be displayed in different colors.

In the circle graph 54 of the view frustum 40, the ratios of the request contents are displayed in the respective colors. For example, the graph indicates that the observer of the camera 2 of the view frustum 40a frequently requests viewing of player "ΔΔΔ."

Fig. 24 also shows an example of request presentation. In this example, the content colors of the request contents 53 are matched with the colors of the view frustums 40 to present which one of the cameras 2 has received multiple requests and the types of requests.

For example, for the view frustum 40b, viewing of player "ooo" is frequently requested, whereas for the view frustum 40a, viewing of player "xxx" is frequently requested.

In the above description, display is provided in response to a request from the user-side observer. The same display may be provided in response to an instruction from the director or others.

For example, for the overhead video V3 visually confirmed by a cameraperson, the AR system 5 acquires an instruction from the director or others, for example, instruction information through the GUI device 11 and generates the overhead video V3 in Fig. 24 to indicate the shooting direction according to the instruction information. The overhead video V3 is transmitted to the camera 2 and is displayed on the viewfinder or the like.

Hence, for example, the cameraperson of the camera 2 of the view frustum 40a can recognize an instruction of "show player xxx."

Fig. 25 shows a display example of chat windows 55.

For example, for the camera 2 of video including chat comments, the shooting video V1 and the chat window 55 are displayed near the view frustum 40. In this example, the shooting video V1a is displayed near the view frustum 40a, the shooting video V1d is displayed near the view frustum 40d, and the shooting video V1e is displayed near the view frustum 40e. Moreover, the chat windows 55 are displayed next to the shooting videos V1 (V1a, V1d, V1e).

Thus, chat comments about the videos of the cameras 2 are presented. The shooting video V1 is displayed at the same time, so that chat contents corresponding to the contents of the videos are easy to understand. Alternatively, only the chat window 55 may be displayed without displaying the shooting video V1.

In the foregoing examples, in the overhead video V3 the display modes of the view frustums 40 and the display contents of the overhead video V3 are changed according to the observer information RI .

Some of the display contents described in the examples may be conducted, or the multiple examples may be combined.

A processing example for generating the overhead video V3 by the AR system 5 will be described below.

Fig. 26 is a processing example of the AR system 5 that generates the video data of the overhead video V3. In this case, the video data of the overhead video V3 is video data generated by synthesizing the view frustums 40 with the CG space 30 corresponding to the shooting target space 8. In other words, the video data is generated to provide display as shown in Figs. 20 to 25.

For example, the AR system 5 performs the processing of step S101 to step S107 in Fig. 26 for each frame serving as the video data of the overhead video V3. Alternatively, the AR system 5 may perform the processing of Fig. 26 for each intermittent frame instead of each frame.

It can be assumed that these processes are the control processing of the CPU 71 (video processing unit 71a) in the information processing device 70, which serves as the AR system 5, in Fig. 8.

In step S101, the AR system 5 sets the CG space 30. For example, the viewpoint position of the CG space 30 corresponding to the shooting target space 8 is set, and rendering is performed on video serving as the CG space 30 from the viewpoint position. The video of the CG space of the previous frame may be used for the current frame unless the viewpoint position and video contents are changed from the previous frame and the CG space 30.

In step S102, the AR system 5 inputs the shooting video V1 and the metadata MT from the camera 2. Specifically, the shooting video V1 of the current frame, attitude information about the camera 2, a focal distance, an angle of view, and an aperture are acquired.

For example, when the AR system 5 displays the view frustums 40 and shooting videos V1 for the plurality of cameras 2 as shown in Fig. 4, the AR system 5 inputs the shooting video V1 and the metadata MT of each of the cameras 2.

As shown in Fig. 3, when the multiple camera systems 1 are present with one-to-one correspondence between the camera 2 and the AR system 5 and each of the camera systems 1 generates the overhead video V3 including the multiple view frustums 40 and the multiple shooting videos V1, the AR systems 5 preferably cooperate with one another to share the metadata MT and the shooting video V1 of the corresponding camera 2.

In step S103, the AR system 5 inputs the observer information RI. For example, the AR system 5 acquires audience rating information acquired and tabulated by the data management unit 15 at the present time, reaction information, and request information.

The observer information RI as instruction information from the director or others may be input.

In step S104, the AR system 5 sets the display of the overhead video V3 including the view frustums 40. Examples of the processing will be described later.

In step S105, the AR system 5 synthesizes the view frustum 40 corresponding to one or more cameras 2 with the CG space 30 serving as the overhead video V3 and generates the video data of one frame of the overhead video V3. In addition, the shooting video V1 may be further synthesized to generate the video data of one frame of the overhead video V3.

In step S106, the AR system 5 outputs the video data of one frame of the overhead video V3.

The foregoing processing is repeatedly performed until the end of the display of the view frustums 40. Thus, the overhead video V3 including the view frustums 40 is displayed on the terminal device 200, the GUI device 11, or the camera 2. The end of the display of the view frustums 40 refers to the end of the display of the overhead video V3 or the end of the display of the view frustums 40 in the overhead video V3.

Figs. 27, 28, and 29 show examples of the display setting of step S104.

Fig. 27 shows an example of display provided according to an audience rating as in Figs. 20, 21, and 22. In step S120, the AR system 5 acquires audience rating information from the observer information RI. In this case, as an example, audience rating information about all user-side observers is acquired for the shooting videos V1 of the cameras 2. As another example, audience rating information about user-side observers extracted according to the attributes or the current location is acquired.

In step S121, the AR system 5 sets the display of the view frustums 40 corresponding to the cameras 2. For example, for the cameras 2, the AR system 5 sets the direction of the view frustum 40 in the CG space 30 according to the attitude of the camera 2, a quadrangular pyramid shape according to the angle of view, and the positions of the focus plane 41 and the depth-of-field range 42 on the basis of a focal distance and an aperture, from the metadata MT acquired in step S102. This sets the locations and shapes of the view frustums 40 in the overhead video V3.

Furthermore, the AR system 5 compares the audience rating information about the cameras 2 and determines the camera 2 having the highest audience rating. In addition, the AR system 5 sets a normal color and luminance for the view frustums 40 of the cameras 2 other than the camera 2 having the highest audience rating. Moreover, the AR system 5 sets a display mode of highlighting for the view frustum 40 of the camera 2 having the highest audience rating.

In step S122, the AR system 5 makes a display setting according to an audience rating. For example, the AR system 5 makes a setting such that numeric values representing audience ratings are displayed near the view frustums 40 as shown in the example of Fig. 20.

Alternatively, the AR system 5 sets the display contents such that audience ratings are displayed by the count bar 51 as shown in the example of Fig. 21. Alternatively, the AR system 5 sets the display contents such that audience ratings are displayed by the poles 52 as shown in the example of Fig. 22.

After the foregoing processing, the AR system 5 advances to step S105 of Fig. 26 and generates the video data of the overhead video V3 including the view frustums 40 according to the settings in steps S121 and S122.

Fig. 28 shows an example of display provided according to reaction information in the modes of Figs. 20, 21, 22, and 25.

In step S130, the AR system 5 acquires reaction information from the observer information RI. In this case, as an example, reaction information about all user-side observers is acquired for the shooting videos V1 of the cameras 2. As another example, reaction information about user-side observers extracted according to the attributes or the current location is acquired.

In step S131, the AR system 5 sets the display of the view frustums 40 corresponding to the cameras 2. For example, for the cameras 2, the AR system 5 sets locations and shapes of the view frustums 40 in the overhead video V3 on the basis of the metadata MT acquired in step S102. The setting is identical to that of step S121 in Fig. 27.

In this case, the AR system 5 may set highlighting for some of the view frustums 40 according to, for example, the numeric value of reaction. For example, the camera 2 having the largest number of high ratings is determined and highlighting is set for the view frustum 40 corresponding to the camera 2.

In step S132, the AR system 5 makes a display setting according to the reaction information. For example, the AR system 5 makes a setting such that numeric values representing reactions are displayed near the view frustums 40 as shown in the example of Fig. 20.

Alternatively, the AR system 5 sets the display contents such that the numeric values representing reactions are displayed by the count bar 51 as shown in the example of Fig. 21.

Alternatively, the AR system 5 sets the display contents such that the numeric values representing reactions are displayed by the poles 52 as shown in the example of Fig. 22.

Alternatively, the AR system 5 sets the display contents such that the chat windows 55 are displayed as shown in the example of Fig. 25.

After the foregoing processing, the AR system 5 advances to step S105 of Fig. 26 and generates the video data of the overhead video V3 including the view frustums 40 according to the settings in steps S131 and S132.

Fig. 29 shows an example of display provided according to request information in the modes of Figs. 23 and 24.

In step S140, the AR system 5 acquires request information from the observer information RI. In this case, as an example, request information about all user-side observers is acquired for the shooting videos V1 of the cameras 2. As another example, request information about user-side observers extracted according to the attributes or the current location is acquired.

In addition, the AR system 5 may acquire instruction information transmitted from, for example, the GUI device 11 or the control panel 10 by the director or others.

In step S141, the AR system 5 sets the display of the view frustums 40 corresponding to the cameras 2. For example, for the cameras 2, the AR system 5 sets locations and shapes of the view frustums 40 in the overhead video V3 on the basis of the metadata MT acquired in step S102. The setting is identical to that of step S121 in Fig. 27.

In step S142, the AR system 5 makes a display setting according to the request information about the cameras 2. For example, the AR system 5 makes the display setting of the request contents 53 and makes a setting such that the circle graphs 54 of requests are displayed near the view frustums 40 as shown in the examples of Figs. 23 and 24.

After the foregoing processing, the AR system 5 advances to step S105 of Fig. 26 and generates the video data of the overhead video V3 including the view frustums 40 according to the settings in steps S141 and S142.

For example, through the processing described in Figs. 26 to 29, the AR system 5 outputs the video data of the overhead video V3 including the view frustums 40, as the display modes and the display contents based on the observer information RI. Thus, the overhead video V3 is displayed on the terminal device 200, the GUI device 11, or the viewfinder of the camera 2.

### <5. Display for shooting right>

The AR system 5 can also display the overhead video V3 according to the right set for the camera 2.

For example, as shown in Fig. 9, when shooting is performed by the five cameras 2, the view frustums 40a, 40b, 40c, 40d, and 40e are displayed in the overhead video V3.

For some or all of the five cameras 2 corresponding to the view frustums 40, rights are set in advance.

In this case, the rights may include, for example, the position of the camera 2, that is, the shooting position, the shooting direction, the zoom range, and the focus position.

For example, a person who wants to perform shooting in a venue as the shooting target space 8 makes a contract or the like with an operation administrator and sets his/her own right. The AR system 5 managed by an administrator stores rights set for the cameras 2.

The metadata MT transmitted from the camera 2 allows the AR system 5 to recognize, for example, the position, the direction, the angle of view, and the focal distance of the camera 2. The AR system 5 compares information based on the metadata MT and information including the position, the direction, the angle of view, and the focal distance according to the setting of the right, thereby determining whether the camera is performing shooting in the limited scope of right.

For example, for the camera 2 having performed shooting outside the scope of right, the display mode of the view frustum 40 is changed.

For example, Fig. 30 shows an example in which when the camera 2 of the view frustum 40c performs shooting in a direction outside the scope of right, the overhead video V3 is displayed while the display of the view frustum 40c is changed. Hence, for example, the cameraperson of the camera 2 of the view frustum 40c or an administrator such as the direction or others can recognize a state of shooting outside the scope of right.

Alternatively, the AR system 5 may generate the overhead video V3 including a message stating that shooting is performed outside the scope of right.

Fig. 31 is a processing example of the AR system 5. This is an example of a display setting for restricting the right in step S104 of Fig. 26.

In step S150, the AR system 5 determines the layout of the view frustums 40. In other words, the positions, shooting directions, and angles of views of the cameras are determined on the basis of the metadata MT.

In step S151, the AR system 5 determines whether to restrict the right. For each of the cameras 2, the AR system 5 refers to a camera position, the range of shooting directions, the range of angles of view, and the range of focal distances according to the setting of right, and determines whether the current position, shooting direction (camera attitude), angle of view, and focal distance of the camera 2 are set within the scope of right setting.

A shooting time or a shooting duration may be set as the scope of right to determine whether the current time is a permitted time or within a permitted time duration.

In step S152, the AR system 5 sets the display of the view frustums 40. For example, for the cameras 2, the AR system 5 sets the locations and shapes of the view frustums 40 in the overhead video V3 on the basis of the metadata MT acquired in step S102 of Fig. 26. The setting is identical to that of step S121 in Fig. 27.

Furthermore, the AR system 5 makes a setting according to the determination of restriction of right. For example, for the camera 2 performing shooting in the scope of restricted right, a special setting is not made, whereas for the camera 2 performing shooting outside the scope of restricted right, a display mode is set for presenting the state.

In step S153, the AR system 5 outputs information about the camera 2 performing shooting outside the scope of restricted right.

After the foregoing processing, the AR system 5 advances to step S105 of Fig. 26 and generates the video data of the overhead video V3 including the view frustums 40 according to the settings in step S152. Thus, the video data of the overhead video V3 is generated such that the view frustum 40 of the camera 2 performing outside the scope of restricted right is shown in a display mode as a specific warning like the view frustum 40c of Fig. 30.

Hence, the cameraperson or the direction or others can recognize shooting outside the scope of restricted right according to the overhead video V3.

In step S153, the AR system 5 outputs information about the camera 2 performing shooting outside the scope of restricted right, thereby controlling the operation functions of the camera 2 and the switcher 13.

For example, for the corresponding camera 2, shooting may be disabled by enabling, for example, blackout on the screen of the camera.

Alternatively, the switcher 13 may be instructed not to select the shooting video V1 of the corresponding camera 2 as main-track video for broadcasting or distribution.

When the right is set for shooting as described above, the state of compliance with the scope of right can be confirmed by the overhead video V3 including the view frustums 40.

Therefore, the rights holders (including the camera owner, the content owner, and the broadcaster) can impose restrictions on the shooting position, direction, and angle, can protect the contents and subject to be shot, and set a photography-forbidden area.

For example, when user-side observer in a venue permits shooting using a smartphone, a shooting area can also be restricted.

Furthermore, when shooting is properly performed in the scope of restricted right in cooperation with NFT (Non-Fungible Token), the video can also be authorized.

### <6. Other display examples>

Various other examples of displaying video including the view frustums 40, for example, the overhead video V3 can be considered.

When the display mode of the view frustum 40 and the display contents in the overhead video V3 are set according to the observer information RI, some of the contents of the overhead video V3 may be caused to vary with destination.

For example, Figs. 32A, 32B, 32C, and 32D show the overhead video V3 displayed at the same time.

Fig. 32A shows the overhead video V3 visually recognized when the user-side observer watches broadcasting or distribution outside a venue, for example, at home.

Fig. 32B shows the overhead video V3 visually recognized when the user-side observer watches broadcasting or distribution at a venue.

Fig. 32C shows the overhead video V3 visually recognized by the director or others.

Fig. 32D shows the overhead video V3 visually recognized by the cameraperson.

In the overhead video V3 of Fig. 32A, the view frustums 40 are displayed in the CG space 30.

In Fig. 32B, a position 33 of the user-side observer as a viewer is added to the overhead video V3 of Fig. 32A. Thus, the user-side observer can easily recognize the relationship between the position of the observer and the shooting direction of the camera 2.

In Fig. 32C, the display of a high audience rating range 34 including multiple user-side observers as viewers is added to the overhead video V3 of Fig. 32A.

In Fig. 32D, the view frustum 40 (e.g., the view frustum 40a) of the camera 2 operated by the viewing cameraperson is highlighted in the overhead video V3 of Fig. 32C.

Thus, the director or others and the cameraperson can perform an operation for instruction or shooting while confirming a location to be viewed by the user-side observer in the venue. The cameraperson can easily recognize the view frustum 40 displaying the shooting range of the camera 2 in the overhead video V3.

Fig. 33 shows a processing example of the AR system 5 that generates the different overhead video V3 for each destination. This is an example of step S105 in Fig. 26.

The AR system 5 generates the video data of the overhead video V3 for the user-side observer outside the venue in step S201. For example, the video data of the overhead video V3 is generated according to the settings from step S101 to step S104 in Fig. 26.

In step S202, the AR system 5 confirms the presence or absence of the user-side observer viewing the shooting video V1 with the terminal device 200 in the venue serving as the shooting target space 8. For example, the user-side observer who transmits position information is to be confirmed.

In the absence of the user-side observer in the venue, the process advances to step S204.

When the position information about the terminal device 200 is confirmed and the presence of the user-side observer in the venue is determined, the AR system 5 generates the video data of the overhead video V3 for the user-side observer in the venue in step S203. For example, in addition to the settings from step S101 to step S105 in Fig. 26, the video data of the overhead video V3 is generated for each user-side observer in the venue such that the position 33 is displayed according to the position information.

Although each user-side observer is located at a different position, the video data of the overhead video V3 does not need to be generated separately for each user-side observer. For example, the AR system 5 may add, to the video data of the overhead video V3, instruction information for an application program for visual recognition on the smartphone or the like of the user-side observer and superimpose the display of the position 33 according to the current position on the smartphone or the like.

In step S204, the AR system 5 generates the video data of the overhead video V3 for the director or others. For example, in addition to the settings from step S101 to step S104 in Fig. 26, the video data is generated to display the high audience rating range.

In step S205, the AR system 5 generates the video data of the overhead video V3 for the cameraperson. For example, in addition to the settings from step S101 to step S104 in Fig. 26, the video data is generated such that the high audience rating range is displayed and the corresponding view frustum 40 is highlighted for each of the cameras 2 at destinations.

Thereafter, the AR system 5 outputs video in step S106 of Fig. 26.

Specifically, the overhead video V3 is transmitted for the user-side observers outside and in the venue, and the video data of the overhead video V3 for the director or others is transmitted to the GUI device 11 and is displayed thereon. Furthermore, the overhead video V3 for each cameraperson is transmitted to each of the cameras 2 and is displayed on the viewfinder or the like.

Thus, as shown in Figs. 32A, 32B, 32C, and 32D, the overhead video V3 properly changed according to the observer is displayed, though the overhead video V3 is displayed at the same time.

Fig. 34 shows another example of display for the user-side observer in the venue. For example, the user-side observer wearing AR goggles is allowed to visually recognize the view frustums 40 under superimposition AR.

In this way, the view frustums 40 do not always need to be synthesized with the overhead video V3. The view frustums 40 are displayed in a scene viewed from the viewpoint of the observer, so that an area being shot can be easily recognized.

For example, the view frustums of video projected on the background screen of the venue may be shown or highlighted.

Furthermore, when shooting is performed by the user-side observer, the view frustums 40 for the shooting of the observer may be highlighted.

In the overhead video V3 or the like visually recognized by the director or others, the display mode of the view frustum 40 may change in response to a reaction or request from the user-side observer.

In the overhead video V3 or the like visually recognized by the cameraperson, the view frustums for the shooting of the cameraperson may be highlighted and the display of the view frustum 40 corresponding to the camera 2 of the cameraperson may change in response to a reaction or request from the user-side observer.

Reactions and requests from the user-side observer may include a vote. For example, the user-side observer may vote for a location to be projected, and the result may be reflected as the display mode of the view frustum 40 or the display contents of the overhead video V3.

The view frustum 40 may be caused to act as an operator on the screen. For example, in the description of Figs. 19A and 19B, switching to the shooting video V1 is enabled in response to an operation of the view frustum 40. In addition, screen operations such as video replay and erasure of the view frustum 40 may be performed.

For the view frustum 40, for example, information about the camera 2 or information about a broadcast station may be displayed. This identifies the model of camera 2 performing shooting and a broadcast station performing shooting.

When the shooting target space 8 includes a large number of cameras 2, all the view frustums 40 are displayed in a complicated manner. Thus, the view frustums 40 of some of the cameras 2 may be displayed.

For example, the popular view frustums 40 (a large number of views) are displayed or the view frustums selected at random are displayed.

### <7. Summary and modification example>

According to the foregoing embodiment, the following effects are obtained.

The information processing device 70 serving as, for example, the AR system 5 of the embodiment includes the video processing unit 71a that performs processing for generating the video data of the shooting target space 8 including shooting range presentation video (view frustum 40) presenting the shooting range of each of the cameras 2, the video data being generated according to the observer information RI.

The overhead video V3 including the view frustums 40 is generated according to the state of visual recognition by an observer of video provided by broadcasting or distribution according to the observer information RI and a reaction and a request or the like at the time of visual recognition, so that the overhead video V3 presenting the state of the user-side observer can be generated and displayed. Thus, the states of multiple user-side observers can be recognized by each of the user-side observers, the cameraperson, and the director or others.

The embodiment described an example in which the video processing unit 71a sets the display mode of the view frustum 40 according to the observer information RI.

For example, provided as the display mode includes the normal display and highlighting of the view frustum 40, a color setting, a luminance setting, and a blinking display setting.

This allows the view frustum 40 to represent information about the observer. Thus, the user-side observer can recognize video viewed by multiple observers and video with multiple reactions through the view frustums 40. In the presence of the view frustums 40, the shooting locations of the videos in the shooting target space 8 are easily identified. The direction or others can also recognize the number of observers and reactions through the view frustums 40, facilitating the provision of instructions.

The embodiment described an example in which the video processing unit 71a sets display contents to be displayed in association with the view frustums 40 according to the observer information RI.

For example, as shown in the examples of Figs. 20 to 25, the user-side observer and the director or others can clearly recognize the reaction of the user-side observer to the shooting video V1 of each of the cameras 2 according to a number, a graph, text, and an icon or the like that are associated with the view frustum 40. Thus, video is conveniently selected.

The embodiment described an example in which the video processing unit 71a acquires audience rating information about the shooting video V1 of each of the cameras 2 as the observer information RI and generates the video data of the shooting target space 8 reflecting the audience rating information (see Figs. 26 and 27).

For example, as shown in Figs. 20, 21, and 22, the overhead video V3 including the view frustums 40 allows video display according to the audience rating regarding the shooting video V1 of each of the cameras 2. Thus, the observer can recognize the audience rating of the shooting video V1, which is useful for video selection and the like. For example, the video display is useful when video visually recognized by the user-side observer is switched or when an instruction to switch main-track video is provided by the director or others.

This allows the director or others to easily determine the position of popular video captured in the venue of the shooting target space 8.

The embodiment described an example in which the video processing unit 71a acquires reaction information about the observer of the shooting video V1 of each of the cameras 2 as the observer information RI and generates the video data of the shooting target space 8 reflecting the reaction information (see Figs. 26 and 28).

For example, in the modes of Figs. 20, 21, 22, and 25, the overhead video V3 allows video display according to the reaction information about the observer of the shooting video V1 of each of the cameras 2. The reaction information includes, for example, the number of high ratings (like), the number of low ratings, the number of chats, the contents of chats, the number of tips, and the amount of tips. Thus, the observer can recognize the rating of the shooting video V1, which is useful for video selection and the like. For example, the video display is useful when video visually recognized by the user-side observer is switched or when an instruction to switch main-track video is provided by the director or others.

The embodiment described an example in which the video processing unit 71a acquires instruction information or request information about the cameras as the observer information RI and generates the video data of the shooting target space 8 reflecting the acquired instruction information or request information (see Figs. 26 and 29).

For example, the overhead video V3 in the examples of Figs. 23 and 24 can be considered as an example of video that reflects an instruction of the director or others or a request from the user-side observer. Therefore, the cameraperson can view the overhead video V3 as a guide to a camera operation. Furthermore, the overhead video V3 is useful as video of the GUI device 11 that allows the director or others to confirm a request from the user-side observer and provide an instruction to the cameraperson.

Moreover, the overhead video V3 is useful also when the cameras are instructed by the director or others viewing the view frustums 40 such that the shooting positions of the cameras 2 do not overlap each other.

In addition, the overhead video V3 is useful also in a state in which amateur camerapersons performing shooting in the scope of restricted right are to be instructed by the director or others.

The embodiment described an example in which the video processing unit 71a acquires the observer information RI for each frame of the video of the shooting target space 8 and generates the video data of the frame (see Fig. 26).

Thus, in the overhead video V3, display contents including the display mode of the view frustum 40 and the audience rating change according to a change of the observer information, thereby recognizing the state of the observer in real time. Alternatively, processing may be performed to acquire the observer information RI for an intermittent frame instead of each frame and generate the video data of the frame of the overhead video V3 in a period until the subsequent observer information RI is acquired.

The embodiment described an example in which the video processing unit 71a generates the video data of the shooting target space 8 for each of the destinations of the video data (see Fig. 33).

For example, the overhead video V3 for the user-side observer outside the venue, the overhead video V3 for the user-side observer in the venue, the overhead video V3 for the director or others, and the overhead video V3 or the cameraperson are generated. Thus, information can be properly presented to each of the observers of the overhead video V3.

The embodiment described an example in which the video processing unit 71a makes a restricted right determination that determines whether shooting by the camera 2 is performed in the set scope of right, and generates the video data of the shooting target space 8 reflecting the result of the restricted right determination (see Figs. 30 and 31).

When the right of shooting is preset, it is determined whether a shooting operation by the camera 2 is placed in the scope of right, and the determination is reflected in the overhead video V3. This can present the state of compliance with the scope of right when the right is set.

The embodiment described an example in which the video processing unit 71a generates the video data of the shooting target space 8 including the shooting video V1 of the camera 2 along with the view frustum 40 of the camera 2 (see Figs. 12 to 18 and 26).

The view frustum 40 of the camera 2 is displayed in the overhead video V3 serving as the CG space 30, and the shooting video V1 is also displayed at the same time. This allows an observer to easily recognize the correspondence between the video of the camera 2 and a position in the space. For example, the overhead video V3 including the synthesized shooting video V1 is generated in step S105 of Fig. 26, thereby generating the overhead video V3 as shown in Figs. 12 to 18.

The embodiment described an example in which the video processing unit 71a generates the video data of the shooting target space 8 as video to be displayed on a terminal where the shooting video V1 captured by the camera 2 is visually recognized by broadcasting or distribution.

The overhead video V3 is transmitted to the terminal device 200 of the user-side observer and is displayed for the user-side observer. This can provide useful information for selecting the camera of the user-side observer in, for example, multi-view distribution.

The embodiment described an example in which the video processing unit 71a generates the video data of the shooting target space 8 as video to be displayed on a display device visually recognized by the cameraperson operating the camera 2. The overhead video V3 is displayed on the viewfinder or the like of the camera 2 and is visually confirmed by the cameraperson. Thus, the cameraperson can perform a camera operation while recognizing the state or the like of an observer for each of the cameras.

The embodiment described an example in which the video processing unit 71a generates the video data of the shooting target space 8 as video to be displayed on a display device visually recognized by a video production staff member for broadcasting or distributing the shooting video V1 captured by the camera 2. The overhead video V3 is displayed on, for example, the GUI device 11 and is visually confirmed by the director or others. Thus, the director or others can select various instructions or main-track video while recognizing the state or the like of an observer for each of the cameras.

The display modes of the view frustums 40 described in the embodiment and the display contents of the overhead video V3 or the like can be implemented in combination.

In the foregoing example, the overhead video V3 is displayed for video shooting. The technique of the embodiment is also applicable to shooting of still images by the camera 2.

The program of the embodiment is a program that causes a processor such as a CPU and DSP or a device including the processor to perform the processing of Figs. 26, 27, 28, 29, 31, and 33. Specifically, the program of the embodiment is a program that causes the information processing device 70 to perform processing for generating the video data of the shooting target space 8 including shooting range presentation video (view frustum 40) presenting the shooting range of each of the cameras 2, the video data being generated according to the observer information RI about the observer of the shooting video V1 of the camera 2.

According to this program, the information processing device 70 operating like the AR system 5 can be implemented by various computer devices.

Such a program can be recorded in advance in an HDD that is a recording medium built in a device such as a computer device or a ROM in a microcomputer including a CPU. Alternatively, such a program can be stored (recorded) temporarily or permanently on a removable recording medium such as a flexible disc, a CD-ROM (Compact Disc Read Only Memory), an MO (Magneto Optical) disc, a DVD (Digital Versatile Disc), a Blu-ray disc (registered trademark), a magnetic disk, a semiconductor memory, or a memory card. Such a removable recording medium can be provided as so-called packaged software.

In addition, such a program can be installed in a personal computer or the like from a removable recording medium, or can also be downloaded from a download site via a network such as a local area network (LAN) or the Internet.

Furthermore, such a program is suitable for widely providing the information processing device 70 of the embodiment. For example, by downloading the program to a personal computer, a communication device, portable terminal devices such as a smartphone and a tablet, a mobile phone, a game device, a video device, and a PDA (Personal Digital Assistant), these devices can be caused to function as the information processing device 70 of the present disclosure.

Note that the effects described in the present specification are merely examples and are not limited, and other effects may be provided.

The present technique can also be configured as follows:
(1) An information processing device including a video processing unit that performs processing for generating shooting-target-space video data including shooting range presentation video presenting a shooting range of each of a plurality of camera, the shooting-target-space video data being generated in accordance with observer information about the observer of the shooting video of the camera.
(2) The information processing device according to (1), wherein the video processing unit sets the display mode of the shooting range presentation video in accordance with information related to the observer information.
(3) The information processing device according to (1) or (2), wherein the video processing unit sets display content to be displayed in association with the shooting range presentation video in accordance with the observer information.
(4) The information processing device according to any one of (1) to (3), wherein the video processing unit acquires audience rating information about the shooting video of each of the cameras as the observer information and generates shooting-target-space video data reflecting the audience rating information.
(5) The information processing device according to any one of (1) to (4), wherein the video processing unit acquires reaction information about the observer of the shooting video of each of the cameras as the observer information and generates shooting-target-space video data reflecting the reaction information.
(6) The information processing device according to any one of (1) to (5), wherein the video processing unit acquires instruction information or request information about each of the cameras as the observer information and generates shooting-target-space video data reflecting the acquired instruction information or request information.
(7) The information processing device according to any one of (1) to (6), wherein the video processing unit performs processing for acquiring the observer information for each frame or intermittent frame of the shooting-target-space video data and generating the video data of the frame.
(8) The information processing device according to any one of (1) to (7), wherein the video processing unit generates shooting-target-space video data for each of the destinations of a plurality of video data.
(9) The information processing device according to any one of (1) to (8), wherein the video processing unit makes a restricted right determination that determines whether shooting by each of the cameras is performed in the set scope of right, and generates the shooting-target-space video data reflecting the result of the restricted right determination.
(10) The information processing device according to any one of (1) to (9), wherein the video processing unit generates shooting-target-space video data including the shooting video of the camera along with the shooting range presentation video of the camera.
(11) The information processing device according to any one of (1) to (10), wherein the video processing unit generates shooting-target-space video data as video to be displayed on a terminal where the shooting video captured by the camera is visually recognized by broadcasting or distribution.
(12) The information processing device according to any one of (1) to (11), wherein the video processing unit generates shooting-target-space video data as video to be displayed on a display device visually recognized by a cameraperson operating the camera.
(13) The information processing device according to any one of (1) to (12), wherein the video processing unit generates shooting-target-space video data as video to be displayed on a display device visually recognized by a video production staff member for broadcasting or distributing the shooting video captured by the camera.
(14) An information processing method comprising causing an information processing device to:
   perform processing for generating shooting-target-space video data including shooting range presentation video presenting the shooting range of each of a plurality of cameras, the shooting-target-space video data being generated in accordance with observer information about the observer of the shooting video of the camera.
(15) A program causing an information processing device to perform processing for generating shooting-target-space video data including shooting range presentation video presenting the shooting range of each of a plurality of cameras, the shooting-target-space video data being generated in accordance with observer information about the observer of the shooting video of the camera.

### [Reference Signs List]

- 1, 1A: Camera system
- 2: Camera
- 5: AR System
- 8: Shooting target space
- 11: GUI device
- 15: Data management unit
- 30: CG space
- 40,40a,40b,40c,40d,40e: View frustum
- 50: Display screen
- 51: Count bar
- 52: Pole
- 53: Request contents
- 54: Circle graph
- 55: Chat window
- 70: Information processing device
- 71: CPU
- 71a: Video processing unit
- 100: Shooting system
- 101: Cameraperson monitor
- 102: Director monitor
- 200: Terminal device
- V1: Shooting video
- V2: AR superimposed video
- V3: Overhead video
- RI: Observer information

## Claims

1. An information processing device comprising a video processing unit that performs processing for generating shooting-target-space video data including shooting range presentation video presenting a shooting range of each of a plurality of cameras, the shooting-target-space video data being generated in accordance with observer information about an observer of shooting video of the camera.

2. The information processing device according to claim 1, wherein the video processing unit sets a display mode of the shooting range presentation video in accordance with the observer information.

3. The information processing device according to claim 1, wherein the video processing unit sets display content to be displayed in association with the shooting range presentation video in accordance with the observer information.

4. The information processing device according to claim 1, wherein the video processing unit acquires audience rating information about the shooting video of each of the cameras as the observer information and generates shooting-target-space video data reflecting the audience rating information.

5. The information processing device according to claim 1, wherein the video processing unit acquires reaction information about the observer of the shooting video of each of the cameras as the observer information and generates shooting-target-space video data reflecting the reaction information.

6. The information processing device according to claim 1, wherein the video processing unit acquires instruction information or request information about each of the cameras as the observer information and generates shooting-target-space video data reflecting the acquired instruction information or request information.

7. The information processing device according to claim 1, wherein the video processing unit performs processing for acquiring the observer information for each frame or intermittent frame of the shooting-target-space video data and generating video data of the frame.

8. The information processing device according to claim 1, wherein the video processing unit generates shooting-target-space video data for each of destinations of a plurality of video data.

9. The information processing device according to claim 1, wherein the video processing unit makes a restricted right determination that determines whether shooting by each of the cameras is performed in a set scope of right, and generates shooting-target-space video data reflecting a result of the restricted right determination.

10. The information processing device according to claim 1, wherein the video processing unit generates shooting-target-space video data including the shooting video of the camera along with the shooting range presentation video of the camera.

11. The information processing device according to claim 1, wherein the video processing unit generates shooting-target-space video data as video to be displayed on a terminal where the shooting video captured by the camera is visually recognized by broadcasting or distribution.

12. The information processing device according to claim 1, wherein the video processing unit generates shooting-target-space video data as video to be displayed on a display device visually recognized by a cameraperson operating the camera.

13. The information processing device according to claim 1, wherein the video processing unit generates shooting-target-space video data as video to be displayed on a display device visually recognized by a video production staff member for broadcasting or distributing the shooting video captured by the camera.

14. An information processing method comprising causing an information processing device to:
perform processing for generating shooting-target-space video data including shooting range presentation video presenting a shooting range of each of a plurality of cameras, the shooting-target-space video data being generated in accordance with observer information about an observer of shooting video of the camera.

15. A program causing an information processing device to perform processing for generating shooting-target-space video data including shooting range presentation video presenting a shooting range of each of a plurality of cameras, the shooting-target-space video data being generated in accordance with observer information about an observer of shooting video of the camera.
